# EUROPÄISCHE PATENTANMELDUNG

(11) **EP 3 176 174 A1**
(43) Veröffentlichungstag der Anmeldung: **07.06.2017**
(21) Anmeldenummer: 15197762.6
(22) Anmeldetag: 03.12.2015
(51) Int. Cl.: C07F 9/6574, C07F 9/6584, C07F 9/145, C07F 9/24

(54) **VERFAHREN ZUR REDUZIERUNG DES CHLORGEHALTS VON ORGANOTETRAPHOSPHITEN**

(71) Anmelder: Evonik Degussa GmbH, 45128 Essen (DE)
(72) Erfinder: Dyballa, Katrin Marie, 45657 Recklinghausen (DE); Franke, Robert, 45772 Marl (DE)

(57) **Zusammenfassung**

Universell einsetzbares Verfahren zur Reduzierung des Chlorgehalts von Organotetraphosphiten.

## Beschreibung

Die Erfindung betrifft ein universell einsetzbares Verfahren zur Reduzierung des Chlorgehalts von Organotetraphosphiten.

Organophosphorverbindungen haben wegen ihres breiten Anwendungsbereiches eine erhebliche industrielle Bedeutung erlangt. Sie werden unmittelbar als Weichmacher, Flammschutzmittel, UV-Stabilisatoren oder als Antioxidantien eingesetzt. Darüber hinaus stellen sie wichtige Zwischenprodukte bei der Herstellung von Fungiziden, Herbiziden, Insektiziden und Pharmazeutika dar.

Ein spezielles Anwendungsgebiet der Organophosphorverbindungen ist die Katalyse:
So werden insbesondere Phosphine, Phosphite und Phosphoramidite als Liganden in Katalysatorkomplexen verwendet, die wiederum zur homogenen Katalyse von großindustriell betriebenen Prozessen verwendet werden. Dabei ist insbesondere die Hydroformylierung von ungesättigten Verbindungen mit Kohlenmonoxid und Wasserstoff zu nennen, die in der Regel in Gegenwart eines homogenen Katalysatorsystems erfolgt, welches ein Metall sowie mindestens eine Organophosphorverbindung als Ligand aufweist.

Eine Einführung in die homogen katalysierte Hydroformylierung bieten: B. CORNILS, W. A. HERRMANN: Applied Homogeneous Catalysis with Organometallic Compounds. Vol. 1 & 2, VCH, Weinheim, New York, 1996; R. Franke, D. Selent, A. Börner: Applied Hydroformylation. Chem. Rev., 2012, DOI:10.1021/cr3001803.

Die Synthese phosphorhaltiger Liganden ist in der Literatur mehrfach beschrieben. Einen guten Überblick findet man in: "Phosphorous(III) Ligands in Homogeneous Catalysis - Design and Synthesis" von Paul C.J. Kamer und Piet W.N.M. van Leeuwen; John Wiley and Sons, 2012.

Bei der Synthese dieser Liganden werden häufig chlorhaltige Reagenzien verwendet. So wird bei der Synthese von Phosphitliganden meist Phosphortrichlorid (PCl₃) eingesetzt.
Die bei der Herstellung von Organophosphorverbindungen eingesetzten Chlorverbindungen bereiten bei der bestimmungsgemäßen Verwendung bzw. Weiterverarbeitung der Organophosphorverbindung vielerlei Schwierigkeiten:
So wird die gewünschte Organophosphorverbindung niemals sofort rein, sondern stets verunreinigt als ein Organophosphorprodukt erhalten, welches neben der gewünschten Organophosphorverbindung auch Verunreinigungen enthält. Bei den Verunreinigungen handelt es sich um nicht oder unvollständig umgesetzte Reagenzien, um Hilfsstoffe oder um Produkte aus Nebenreaktionen. Dabei bereiten insbesondere Verunreinigungen in Form von Chlorverbindungen Schwierigkeiten:
   Gelangen die chlorhaltigen Verunreinigungen zusammen mit der als Ligand verwendeten Organophosphorverbindung in einen stählernen Druckreaktor, so ist dieser durch das Chlorid erhöhter Korrosion ausgesetzt. Dies gilt ganz besonders für kontinuierlich betriebene Prozesse, bei denen die Organophosphorverbindung im Laufe der Reaktion nachdosiert wird. Dies ist beispielsweise bei der Verwendung der Organophosphorverbindung als Ligand in der großtechnischen Hydroformylierung der Fall. Durch die Nachdosierung kommt es zwangsläufig auch zu einer Akkumulation der Nebenkomponenten im Reaktor. Dies ist insbesondere dann kritisch, wenn Chlorid eine der Nebenkomponenten darstellt, da Chlorid selbst rostfreie Stähle angreift (vgl. Merkblatt 893 "Edelstahl rostfrei für die Wasserwirtschaft", 1. Auflage 2007, Hrsg. Informationsstelle Edelstahl Rostfrei, Düsseldorf.)

In Anwesenheit von Chloridionen droht insbesondere eine Spannungsrisskorrosion, welche im günstigeren Fall zu einer vorzeitigen Abstellung des Prozesses und zur Überholung des Reaktors führt, im ungünstigsten Fall aber auch ein Bersten des Reaktors zur Folge haben kann. Es ist daher von eminenter Bedeutung, ein Einschleppen von chlorhaltigen Verbindungen über das organophosphorhaltige Katalysatorsystem zu unterbinden.

Eine wichtige Klasse der Organophosphorverbindungen sind die Organotetraphosphite oder kurz Tetraphospite genannt, die eine großtechnisch interessante Ligandenklasse darstellen.

Die WO 2014/177355 A1 beschreibt ein Verfahren zur Herstellung von Organotetraphosphiten mit einer Hostanox O3-Leitstruktur (Bis[3,3-bis-(4'-hydroxy-3'-tert-butylphenyl)butanosäure]-glycolester bzw. Ethylen-bis[3,3-bis(3-tert-butyl-4-hydroxyphenyl)butyrat]) sowie die Verwendung dieser Liganden in der Hydroformylierung.
Die vorgenannte Schrift beschreibt jedoch kein Verfahren zur Reduzierung des Chlorgehalts der Organotetraphosphite.

Es ist daher wichtig, einen Herstellungs- und Aufreinigungsprozess für Organotetraphosphite zu entwickeln, der die entsprechenden Liganden mit geringem Chloridgehalt bereitstellt, bevor sie in einem großtechnischen Verfahren eingesetzt werden können.
Dieses Verfahren sollte auf möglichst viele Organotetraphosphite anwendbar sein, da die Problematik des Chlors bei jedem Liganden eine elementare Rolle spielt, bevor er in einer großtechnischen Anlage eingesetzt werden kann.

Der Chloridgehalt lässt sich analytisch einfach bestimmen; zum Beispiel durch wässrige Titration. Weitreichender ist die Bestimmung des Gesamtchlorgehalts, der neben den Chloriden auch anderweitig gebundenes Chlor umfasst. Ein Abstellen auf den Gesamtchlorgehalt ist auch insoweit sachdienlich, als nicht ausgeschlossen werden kann, dass auch anderweitig gebundenes Chlor den Reaktor zu schädigen vermag. Bei der Bemessung der Grenzwerte für Gesamtchlor bleibt aber der Chloridanteil maßgeblich.

Ein geeignetes Verfahren zur Bestimmung des Gesamtchlorgehalts ist die Verbrennung nach Wickbold mit Probenvorbereitung nach DIN 51408 und Messung per lonenchromatographie nach DIN EN ISO 10304.

In der Patentliteratur sind verschiedene Methoden zur Reduktion des Gesamtchlorgehalts von Organophosphor-Liganden in Anschluss an die eigentliche Synthese bekannt:
Die WO 2013/098368 A1 beschreibt die Aufreinigung von Organodiphosphiten, wobei die zu entfernenden Verunreinigungen nicht nur Chloridionen, sondern vor allem Diole, basische Verunreinigungen, Mono- und Dioxide sowie sekundäre Organophosphite umfassen. Wegen des unterschiedlichen strukturellen Aufbaus und des damit verbundenen unterschiedlichen chemischen Verhaltens von Tetraphosphiten und Diphosphiten ist das in dieser älteren Schrift beschriebene Aufreinigungsverfahren nicht auf die Aufreinigung von Organotetraphosphiten übertragbar.

In DE 10 2011 002 640 A1 wird ein Verfahren zur Aufreinigung von Biphephos (6,6'-[(3,3'-Di-tert-butyl-5,5'-dimethoxy-1,1'-biphenyl-2,2'diyl)bis(oxy)]bis(dibenzo[d,f][1,3,2]dioxaphosphepin)) beschrieben. Mit dem dort beschriebenen Verfahren soll der Chlorgehalt von Biphephos reduziert werden. Dies erfolgt dadurch, dass das Biphephos mit einem Lösungsmittel ausgewählt aus Ethylacetat, Anisol, ortho-Xylol, Toluol, Aceton, 2-Propanol und C₅-C₁₀-Alkanen ausgewaschen oder aus einem solchen Lösungsmittel umkristallisiert wird.
Hierbei ist jedoch die lange Zeit, die zum Ausfallen bzw. Auskristallisieren des Produktes notwendig ist, verbesserungswürdig. Das Ausfallen des Liganden erfolgt über Nacht, also benötigt man > 8 Stunden. Ferner wird in den Beispielen darauf verwiesen, dass im Anschluss an die Fällung über Nacht erneut ein Lösungsmittel zugegeben werden muss, um die Ausfällung zu komplementieren (Beispiel 2 der DE 10 2011 002 640 A1). Diese langen Reaktionszeiten sind bei großtechnischen Synthesen problematisch, da lange Verweilzeiten und damit letztlich lange Produktionszeiten für den Liganden zu einer Verteuerung desselbigen führen.

Die Schrift EP 0 285 136 beansprucht ein Verfahren zur Reinigung tertiärer Organophosphite von sekundären Organophosphiten. Das Verfahren sieht eine Behandlung einer sowohl tertiäre als auch sekundäre Organophosphite enthaltenden Zusammensetzung mit Wasser bei erhöhter Temperatur in Gegenwart einer Lewis-Base vor. Als Lewis-Basen werden anorganische Salze (Carbonate, Hydroxide, Oxide), tertiäre Amine und Polymere, die Amin-Gruppen tragen, eingesetzt. Die eingesetzte Menge an Wasser wie auch die eingesetzte Menge an Lewis-Base betragen dabei insbesondere jeweils mindestens 0,5 bis 1 Äquivalent bezogen auf die Menge an sekundärem Organophosphit.
Hier liegt ein signifikanter Nachteil des beanspruchten Verfahrens, da Wasser nicht nur in Spuren, sondern in den vorgenannten größeren Mengen eingesetzt wird. Denn dabei reagieren nicht nur die zu entfernenden Verunreinigungen, sondern auch die tertiären Organophosphite selbst, so dass, je nach Hydrolysestabilität der Organophosphite, ein Teil des Wertprodukts verloren geht.

Die Schrift DE 10 2004 049 339 beschreibt ein Verfahren zur Reinigung von phosphorhaltigen Chelatliganden mittels Extraktion unter Verwendung eines polaren Extraktionsmittels. Der Rohligand wurde hierbei sechsmal mit einem polaren Lösungsmittel extrahiert und weist im Anschluss einen Gehalt an Aminbase, Aminhydrochlorid oder deren Gemischen von weniger als 100 ppm auf. Bei dieser Art der Aufreinigung sind jedoch enorme Mengen an Lösungsmittel notwendig, was aus ökonomischer und ökologischer Sicht verbesserungswürdig ist.

US 3,980,739 offenbart die Aufreinigung von Triarylphosphiten unter Einsatz von NH₃ beziehungsweise NH₂-NH₂. Die Aufreinigung erfolgt hier in einem Temperaturbereich von 20 °C bis 120 °C. Hierbei werden als Basen Ammoniak und Hydrazin verwendet. Beide Verbindungen sind nach dem Global harmonisierten System zur Einstufung und Kennzeichnung von Chemikalien als besonders giftig und krebserregend eingestuft. Eine Substitution durch weniger gefährliche Verbindungen ist also wünschenswert. Ferner wird Ammoniak als Gas eingesetzt, was bei einem großtechnischen Einsatz besondere Sicherheitsmaßnahmen bedarf und ein Einsatz von flüssigen Reagenzien bevorzugt werden würde.

In DE 10 2014 206 520 A1 werden vergleichbare Strukturen offenbart, jedoch kein Hinweis auf deren Aufreinigungsmöglichkeiten gegeben.

Aufgabe der vorliegenden Erfindung war es nun, ein Aufreinigungsverfahren für Organotetraphosphite zu entwickeln, bei dem der Chlorgehalt reduziert wird, ohne dass dieses Verfahren die zuvor beschriebenen Nachteile aufweist.

Insbesondere bestand die Aufgabe darin, mit dem Verfahren Organotetraphosphite mit einem Chlorgehalt von mehr als 1.000 ppm bis 100.000 ppm und insbesondere von 2.000 ppm bis 100.000 ppm im Organotetraphosphit auf einen Chlorgehalt von weniger als 1.000 ppm im Organotetraphosphit aufzureinigen. Vorzugsweise sollte der Chlorgehalt auf weniger als 500 ppm im Organotetraphosphit, und besonders bevorzugt auf weniger als 250 ppm im Organotetraphosphit reduziert werden. Die angegebenen Chlorgehalte verstehen sich als Gesamtchlorgehalte.

Das verunreinigte Organotetraphosphit kann nämlich organische Chloride und/oder anorganische Chloride enthalten. Organische Chloride enthalten mindestens ein Kohlenstoffatom, währenddessen anorganische Chloride kein Kohlenstoff aufweisen. Verschmutzungen des Organophosphorprodukts durch die folgenden Chloride sind besonders wahrscheinlich, da diese chlorhaltigen Verbindungen entweder bei der Synthese von Organophosphorverbindungen benötigt werden oder als Nebenprodukte unvermeidlich anfallen:
Phosphortrichlorid, Chlorophosphite, Dichlorophosphite, Hydrochloride von Aminen, Hydrochloride von Alkalimetallen, Chloride von Erdalkalimetallen, chlorhaltige Säuren erhältlich aus der Hydrolyse von Phosphortrichlorid.

Deshalb weist das verunreinigte Organotetraphosphit in der Regel mindestens eines der aufgezählten Chloride auf.

Gelöst wird diese Aufgabe durch ein Verfahren gemäß Anspruch 1.

Verfahren zur Reduktion des Chlorgehalts in einem Organotetraphosphit einer der allgemeinen Formeln **I** oder **II:** 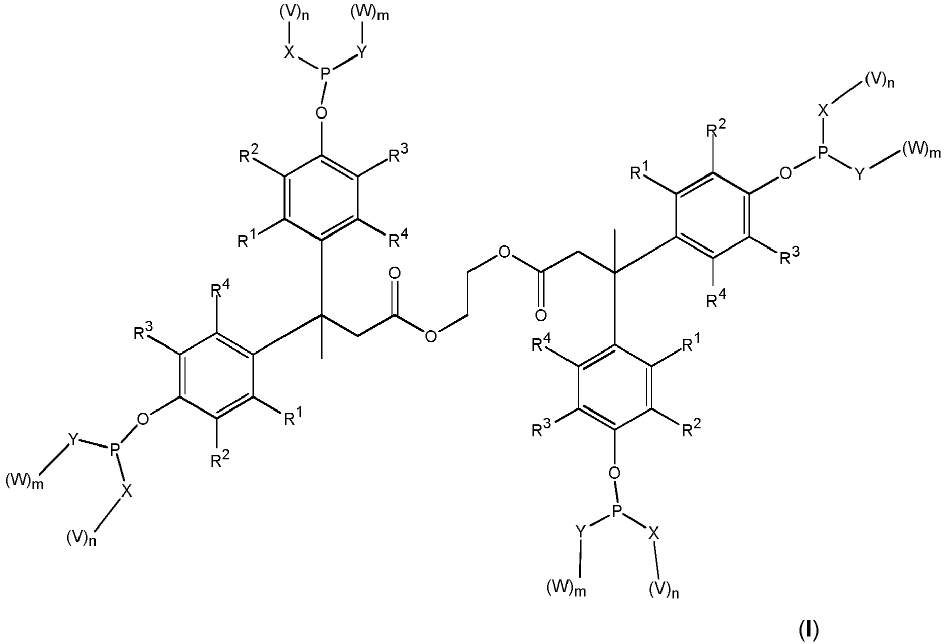 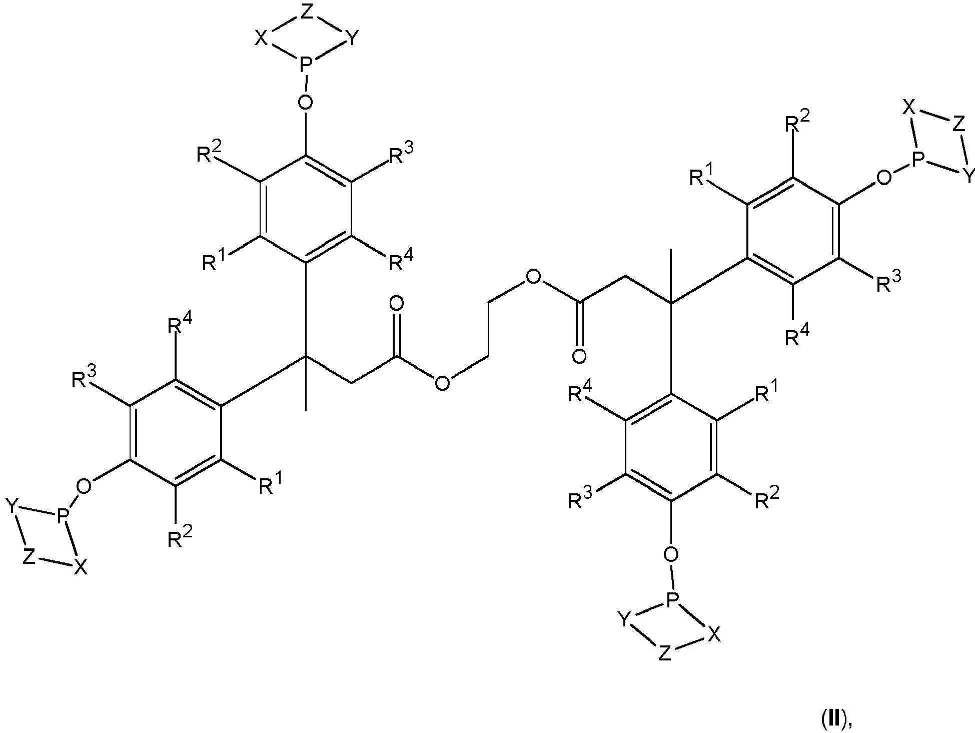 wobei
R¹, R², R³, R⁴ jeweils unabhängig voneinander ausgewählt sind aus: -H, -(C₁-C₁₂)-Alkyl;
V und W jeweils unabhängig voneinander ausgewählt sind aus:
   -H, -(C₁-C₁₂)-Alkyl, -O-(C₁-C₁₂)-Alkyl, -(C₁-C₁₂)-Heteroalkyl, -(C₄-C₂₀)-Aryl, -(C₄-C₂₀)-Aryl-(C₁-C₁₂)-Alkyl, -(C₄-C₂₀)-Aryl-O-(C₁-C₁₂)-Alkyl, -(C₁-C₁₂)-Alkyl-(C₄-C₂₀)-Aryl, -(C₄-C₂₀)-Aryl-COO-(C₁-C₁₂)-Alkyl, -(C₄-C₂₀)-Aryl-CONH-(C₁-C₁₂)-Alkyl, , -(C₄-C₂₀)-Aryl-CON[(C₁-C₁₂)-Alkyl]₂, -(C₄-C₂₀)-Heteroaryl, -(C₄-C₂₀)-Heteroaryl-(C₁-C₁₂)-Alkyl, -(C₃-C₁₂)-Cycloalkyl, -(C₃-C₁₂)-Cycloalkyl-(C₁-C₁₂)-Alkyl, -(C₃-C₁₂)-Heterocycloalkyl, -(C₃-C₁₂)-Heterocycloalkyl-(C₁-C₁₂)-Alkyl, -CO-(C₁-C₁₂₎-Alkyl, -CO-(C₄-C₂₀)-Aryl, -CO-(C₄-C₂₀)-Heteroalkyl, -(C₄-C₂₀)-Aryl-CO-(C₁-C₁₂)-Alkyl, -(Cₐ-C₂₀)-Aryl-CO-(C₄-C₂₀)-Aryl;
   X und Y jeweils unabhängig voneinander ausgewählt sind aus O und N;
   wobei für den Fall, dass X für O steht n = 1 ist,
   und für den Fall, dass Y für O steht m = 1 ist,
   und für den Fall, dass X für N steht n = 1 oder 2 ist,
   und für den Fall, dass Y für N steht m = 1 oder 2 ist;
   Z ausgewählt ist aus:
      -(C₁-C₁₄)-Alkyl-, -(C₄-C₂₀)-Aryl-, -(C₄-C₂₀)-Aryl-(C₁-C₁₂)-Alkyl-, -(C₁-C₁₄)-Heteroalkyl-, -(C₄-C₂₀)-Heteroaryl-, -CO-(C₄-C₁₄)-Heteroaryl-, -CO-(C₄-C₂₀)-Aryl-, -(C₃-C₁₂)-Cycloalkyl-, -(C₃-C₁₂)-Heterocycloalkyl-, -(C₄-C₂₀)-Aryl-CO-(C₄-C₂₀)-Aryl-, -(C₁-C₁₄)-Alkyl-O-(C₁-C₁₄)-Alkyl-;
      wobei die genannten Alkyl-, Heteroalkyl-, Cycloalkyl-, Heterocycloalkyl-, Aryl- und Heteroarylgruppen optional ein oder mehrfach substituiert sind;
      umfassend die Verfahrensschritte:
         a) Kontaktieren des Organotetraphosphits mit einer Lösung, die zumindest ein Lösungsmittel und zumindest eine Base umfasst, wobei das zumindest eine Lösungsmittel ausgewählt ist aus Aromaten, Alkoholen, Aceton, Ethylacetat, Acetonitril und Ether, und wobei die zumindest eine Base ausgewählt ist aus Aminbasen, Alkoholaten, Pyridin, Pyridinderivaten, *N*-Methyl-2-pyrrolidon Triethylamin und Triethanolamin,
         b) Einstellen der Temperatur auf einen Wert im Bereich von - 20 °C bis + 15 °C,
         c) Abtrennen des aufgereinigten Organotetraphosphits.

Auch in den Fällen, in denen X und/oder Y für N steht, werden Verbindungen mit einer Struktur gemäß **I** oder **II** für die Zwecke der Erfindung als Organotetraphosphite bezeichnet, auch wenn diese aufgrund der P-N-Bindung zutreffender als Organotetraphosphoramidite zu bezeichnen wären.

Optional enthält die Lösung, mit der das Organotetraphosphit in Schritt a) des Verfahrens kontaktiert wird, neben dem zumindest einen Lösungsmittel und der zumindest einen Base auch Spuren von Wasser (max. 5 % bezogen auf den Gehalt an Lösungsmittel) und/oder das zumindest eine Lösungsmittel und/oder die zumindest eine Base ist wasserhaltig. Bei einer Lösung, die Spuren von Wasser enthält, beträgt der Gehalt an Wasser bezogen auf den Gehalt an Lösungsmittel vorzugsweise bis zu 5 %, insbesondere 1 bis 2 % oder < 1 %.

Die vorgenannten optionalen Wasserspuren können alternativ auch erst während bzw. nach dem Kontaktieren des Organotetraphosphits mit der die Base und das Lösungsmittel enthaltenden Lösung in Schritt a) zugefügt werden. In diesem Fall enthält die Lösung, mit der das Organotetraphosphit in Schritt a) kontaktiert wird, zunächst kein Wasser, d.h. die in der Lösung enthaltene zumindest eine Base sowie das zumindest eine Lösungsmittel sind wasserfrei. In dieser Ausführungsform wird jedoch nachträglich eine kleine Menge Wasser, nämlich bis zu 5 %, insbesondere 1 bis 2 % oder < 1 % bezogen auf den Gehalt an Lösungsmittel, zu der das Organotetraphosphit enthaltenden Lösung gegeben.

Lösungsmittel gelten hierbei als wasserfrei, wenn sie nur noch Spuren an Wasser (< 50 ppm) beinhalten.

Durch die in der Lösung enthaltene zumindest eine Base werden unerwünschte Nebenreaktionen, die beispielsweise in Gegenwart von Wasser oder Alkoholen stattfinden würden, wie z.B. eine Alkoholyse oder eine Umesterung, unterdrückt. Die zumindest eine Base hat bevorzugt weiterhin den Vorteil, dass sich das ursprünglich im Organotetraphosphit enthaltene Chlor in dieser löst.

Im Rahmen der Erfindung steht Alkyl für einen nicht verzweigten oder verzweigten aliphatischen Rest. (C₁-C₁₂)-Alkyl und O-(C₁-C₁₂)-Alkyl können jeweils unsubstituiert oder durch einen oder mehrere gleiche oder verschiedene Reste substituiert sein, die ausgewählt sind unter (C₃-C₁₂)-Cycloalkyl, (C₃-C₁₂)-Heterocycloalkyl, (C₆-C₂₀)-Aryl, Fluor, Chlor, Cyano, Formyl, Acyl oder Alkoxycarbonyl.

(C₃-C₁₂)-Cycloalkyl und (C₃-C₁₂)-Heterocycloalkyl können jeweils unsubstituiert oder durch einen oder mehrere gleiche oder verschiedene Reste substituiert sein, die ausgewählt sind unter (C₁-C₁₂)-Alkyl, (C₁-C₁₂)-Alkoxy, (C₃-C₁₂)-Cycloalkyl, (C₃-C₁₂)-Heterocycloalkyl, (C₆-C₂₀)-Aryl, Fluor, Chlor, Cyano, Formyl, Acyl oder Alkoxycarbonyl.

(C₄-C₂₀)-Aryl können jeweils unsubstituiert oder durch einen oder mehrere gleiche oder verschiedene Reste substituiert sein, die ausgewählt sind unter (C₁-C₁₂)-Alkyl, (C₁-C₁₂)-Alkoxy, (C₃-C₁₂)-Cycloalkyl, (C₃-C₁₂)-Heterocycloalkyl, (C₆-C₂₀)-Aryl, Fluor, Chlor, Cyano, Formyl, Acyl oder Alkoxycarbonyl.

Im Rahmen der Erfindung umfasst der Ausdruck -(C₁-C₁₂)-Alkyl geradkettige und verzweigte Alkylgruppen. Vorzugsweise handelt es sich dabei um unsubstituierte geradkettige oder verzweigte -(C₁-C₈)-Alkyl- und ganz bevorzugt -(C₁-C₆)-Alkylgruppen. Beispiele für -(C₁-C₁₂)-Alkylgruppen sind insbesondere Methyl, Ethyl, Propyl, Isopropyl, n-Butyl, iso-Butyl, sec.-Butyl, tert.-Butyl, n-Pentyl, 2-Pentyl, 2-Methylbutyl-, 3-Methylbutyl-, 1,2-Dimethylpropyl-, 1,1-Dimethylpropyl, 2,2-Dimethylpropyl-, 1-Ethylpropyl-, n-Hexyl-, 2-Hexyl-, 2-Methylpentyl-, 3-Methylpentyl-, 4-Methylpentyl-, 1,1-Dimethylbutyl-, 1,2-Dimethylbutyl-, 2,2-Dimethylbutyl-, 1,3-Dimethylbutyl-, 2,3-Dimethylbutyl-, 3,3-Dimethylbutyl-, 1,1,2-Trimethylpropyl-, 1,2,2-Trimethylpropyl-, 1-Ethylbutyl-, 1-Ethyl-2-methylpropyl-, n-Heptyl-, 2-Heptyl-, 3-Heptyl-, 2-Ethylpentyl-, 1-Propylbutyl-, n-Octyl-, 2-Ethylhexyl-, 2-Propylheptyl-, Nonyl-, Decyl.

Die Erläuterungen zum Ausdruck -(C₁-C₁₂)-Alkyl gelten auch für die Alkylgruppen in -O-(C₁-C₁₂)-Alkyl, also in -(C₁-C₁₂)-Alkoxy. Vorzugsweise handelt es sich dabei um unsubstituierte geradkettige oder verzweigte -(C₁-C₆)-Alkoxygruppen.

Substituierte -(C₁-C₁₂)-Alkylgruppen und substituierte -(C₁-C₁₂)-Alkoxygruppen können in Abhängigkeit von ihrer Kettenlänge einen oder mehrere Substituenten aufweisen. Die Substituenten sind vorzugsweise unabhängig voneinander ausgewählt unter -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl.

Der Ausdruck -(C₃-C₁₂)-Cycloalkyl umfasst im Sinne der vorliegenden Erfindung mono-, bi- oder tricyclische Kohlenwasserstoffreste mit 3 bis 12, insbesondere 5 bis 12 Kohlenstoffatomen. Dazu zählen Cyclopropyl-, Cyclobutyl-, Cyclopentyl-, Cyclohexyl-, Cycloheptyl-, Cyclooctyl-, Cyclododecyl-, Cyclopentadecyl-, Norbonyl- oder Adamantyl.

Der Ausdruck -(C₃-C₁₂)-Heterocycloalkylgruppen umfasst im Sinne der vorliegenden Erfindung nichtaromatische, gesättigte oder teilweise ungesättigte cycloaliphatische Gruppen mit 3 bis 12, insbesondere 5 bis 12, Kohlenstoffatomen. Die -(C₃-C₁₂)-Heterocycloalkylgruppen weisen vorzugsweise 3 bis 8, besonders bevorzugt 5 oder 6, Ringatome auf. In den Heterocycloalkylgruppen sind im Unterschied zu den Cycloalkylgruppen 1, 2, 3 oder 4 der Ringkohlenstoffatome durch Heteroatome oder heteroatomhaltige Gruppen ersetzt. Die Heteroatome oder die heteroatomhaltige Gruppen sind vorzugsweise ausgewählt unter -O-, -S-, -N-, -N(=O)-, -C(=O)- oder -S(=O)-. Beispiele für -(C₃-C₁₂)-Heterocycloalkylgruppen Tetrahydrothiophenyl, Tetrahydrofuryl, Tetrahydropyranyl und Dioxanyl.

Substituierte -(C₃-C₁₂)-Cycloalkylgruppen und substituierte -(C₃-C₁₂)-Heterocycloalkylgruppen können, in Abhängigkeit von ihrer Ringgröße, einen oder mehrere (z.B. 1, 2, 3, 4 oder 5) weitere Substituenten aufweisen. Diese Substituenten sind vorzugsweise unabhängig voneinander ausgewählt unter -(C₁-C₁₂)-Alkyl, -(C₁-C₁₂)-Alkoxy, -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl. Substituierte -(C₃-C₁₂)-Cycloalkylgruppen tragen vorzugsweise eine oder mehrere -(C₁-C₆)-Alkylgruppen. Substituierte -(C₃-C₁₂)-Heterocycloalkylgruppen tragen vorzugsweise eine oder mehrere -(C₁-C₆)-Alkylgruppen.

Der Ausdruck -(C₄-C₂₀)-Aryl umfasst im Sinne der vorliegenden Erfindung mono- oder polycyclische aromatische Kohlenwasserstoffreste. Diese weisen 4 bis 20 Ringatome, besonders bevorzugt 6 bis 14 Ringatome, insbesondere 6 bis 10 Ringatome, auf. Aryl steht vorzugsweise für -(C₆-C₁₀)-Aryl. Aryl steht insbesondere für Phenyl, Naphthyl, Indenyl, Fluorenyl, Anthracenyl, Phenanthrenyl, Naphthacenyl, Chrysenyl, Pyrenyl, Coronenyl, Biphenyl. Insbesondere steht Aryl für Phenyl, Biphenyl, Naphthyl und Antracenyl.

Substituierte -(C₄-C₂₀)-Arylgruppen können, in Abhängigkeit von der Ringgröße, einen oder mehrere (z.B. 1, 2, 3, 4 oder 5) Substituenten aufweisen. Diese Substituenten sind vorzugsweise unabhängig voneinander ausgewählt unter -(C₁-C₁₂)-Alkyl, -(C₁-C₁₂)-Alkoxy, -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl.

Substituierte -(C₄-C₂₀)-Arylgruppen sind vorzugsweise substituierte -(C₆-C₁₀)-Arylgruppen, insbesondere substituiertes Phenyl, substituiertes Biphenyl, substituiertes Naphthyl oder substituiertes Anthracenyl. Substituierte -(C₄-C₂₀)-Arylgruppen tragen vorzugsweise einen oder mehrere z.B. 1, 2, 3, 4 oder 5 Substituenten, ausgewählt unter -(C₁-C₁₂)-Alkylgruppen, -(C₁-C₁₂)-Alkoxygruppen.

In einer Ausführungsform des erfindungsgemäßen Verfahrens sind V und W jeweils unabhängig voneinander ausgewählt aus:
-H, -(C₁-C₁₂)-Alkyl, -O-(C₁-C₁₂)-Alkyl, -(C₁-C₁₂)-Heteroalkyl, -(C₄-C₂₀)-Aryl, -(C₄-C₂₀)-Aryl-(C₁-C₁₂)-Alkyl, -(C₄-C₂₀)-Aryl-O-(C₁-C₁₂)-Alkyl, -(C₁-C₁₂)-Alkyl-(C₄-C₂₀)-Aryl, -(C₄-C₂₀)-Aryl-COO-(C₁-C₁₂)-Alkyl, -(C₄-C₂₀)-Heteroaryl, -(C₃-C₁₂)-Cycloalkyl, -(C₃-C₁₂)-Heterocycloalkyl, -(C₃-C₁₂)-Heterocycloalkyl-(C₁-C₁₂)-Alkyl, -CO-(C₁-C₁₂)-Alkyl, -CO-(C₄-C₂₀)-Aryl, -CO-(C₄-C₂₀)-Heteroalkyl, -(C₄-C₂₀)-Aryl-CO-(C₁-C₁₂)-Alkyl, -(C4-C₂₀)-Aryl-CO-(C₄-C₂₀)-Aryl.

In einer Ausführungsform sind V und W jeweils unabhängig voneinander ausgewählt aus:
-H, -(C₁-C₁₂)-Alkyl, -O-(C₁-C₁₂)-Alkyl, -(C₄-C₂₀)-Aryl, -(C₄-C₂₀)-Aryl-(C₁-C₁₂)-Alkyl, -(C₄-C₂₀)-Aryl-O-(C₁-C₁₂)-Alkyl, -(C₁-C₁₂)-Alkyl-(C₄-C₂₀)-Aryl, -(C₄-C₂₀)-Aryl-COO-(C₁-C₁₂)-Alkyl.

In einer Ausführungsform stehen V und W oder nur einer der Substituenten V und W für: 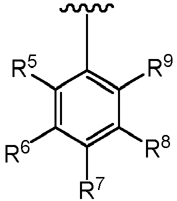 wobei R⁵, R⁶, R¹, R⁸, R⁹ jeweils unabhängig voneinander ausgewählt sind aus -H, -(C₁-C₁₂)-Alkyl, -O-(C₁-C₁₂)-Alkyl, -Phenyl, -COO-(C₁-C₁₂)-Alkyl.

In einer Ausführungsform stehen V und W für den gleichen Rest.

In einer Ausführungsform ist Z ausgewählt aus:
-(C₁-C₁₄)-Alkyl-, -(C₄-C₂₀)-Aryl-, -(C₄-C₂₀)-Aryl-(C₁-C₁₂)-Alkyl-, -(C₄-C₂₀)-Heteroaryl-, -CO-(C₄-C₁₄)-Heteroaryl-, -CO-(C₄-C₂₀)-Aryl-.

In einer Variante des Verfahrens ist Z ausgewählt aus 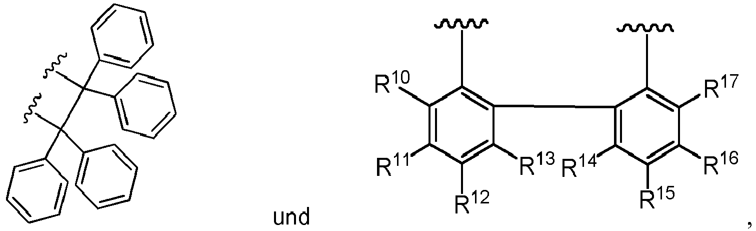 wobei R¹⁰, R¹¹, R¹², R¹³, R¹⁴, R¹⁵, R¹⁶, R¹⁷ jeweils unabhängig voneinander ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl, -Halogen (wie Cl, F, Br, I), -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁₋C₁₂)-Alkyl, -CO-(C₆-C₂₀)-Aryl, -COOH, -OH, -SO₃H, -SO₃Na, -NO₂, -CN, -NH₂, -N[(C₁-C₁₂)-Alkyl]₂.

In einer Variante des Verfahrens sind R¹⁰, R¹¹, R¹², R¹³, R¹⁴, R¹⁵, R¹⁶, R¹⁷ jeweils unabhängig voneinander ausgewählt aus:
-H, -(C₁-C₁₂)-Alkyl, -O-(C₁-C₁₂)-Alkyl,

In einer Ausführungsform stehen R¹, R³, R⁴ für -H.

In einer Ausführungsform steht R² für -(C₁-C₁₂)-Alkyl.

Hierbei ist *tert*-Butyl bevorzugt.

In einer Ausführungsform stehen X und Y für O.

In einer Ausführungsform stehen X und Y für N.

In einer Ausführungsform stehen X und Y für O, wobei dieses mit einem Phenylrest verknüpft ist, welcher wiederum substituiert sein kann, und auch Bestandteil eines größeren kondensierten aromatischen Systems sein kann.

In einer Variante des Verfahrens ist das zumindest eine Lösungsmittel ausgewählt aus: Ethylacetat, Anisol, ortho-Xylol, Toluol, Aceton, Methanol, Ethanol, Propanol, iso-Propanol, Acetonitril.

Bevorzugt ist das zumindest eine Lösungsmittel ausgewählt aus: Acetonitril, Ethylacetat, Ethanol, Propanol, Toluol.

Besonders bevorzugt ist das zumindest eine Lösungsmittel Ethanol.

In einer Variante des Verfahrens ist die zumindest eine Base ausgewählt aus: Triethylamin, Dimethylaminobutan (DMAB), Pentylamin, Hexylamin, Dibutylamin, *N*-Methyl-2-pyrrolidon (NMP), Triethanolamin, Natrium-methanolat, Natrium-ethanolat, Pyridin, Dimethylaminopyridin (DMAP).

In einer Variante des Verfahrens ist die zumindest eine Base eine Aminbase.

Bevorzugt ist die zumindest eine Base ausgewählt aus: Triethylamin, Dimethylaminobutan (DMAB) Natrium-methanolat, Natrium-ethanolat, Pyridin, Dimethylaminopyridin (DMAP).

Besonders bevorzugt ist die zumindest eine Base ausgewählt aus Dimethylaminobutan (DMAB) und Triethylamin.

In einer Variante des Verfahrens erfolgt das Kontaktieren in Schritt a) dadurch, dass das Lösungsmittel und die Base, z.B. bei Raumtemperatur, zu dem festen Organotetraphosphit gegeben werden und die entstehende Suspension für mindestens eine Stunde gerührt wird. Bevorzugt gehen dabei die chlorhaltigen Verunreinigungen in Lösung, während das Organotetraphosphit überwiegend ungelöst bleibt.

In einer Variante des Verfahrens wird nach Schritt a), jedoch vor Schritt c) ein weiteres Lösungsmittel zu der Lösung gegeben, das ausgewählt ist aus Aromaten, Alkoholen, Aceton, Ethylacetat, Acetonitril, und Ether.

In einer weiteren Variante des Verfahrens wird die Temperatur im Verfahrensschritt b) auf einen Wert einstellen im Bereich von - 20 °C bis + 10 °C, insbesondere im Bereich von- 10 °C bis + 10 °C, wodurch ggf. in Lösung gegangenes Organotetraphosphit wieder ausgefällt wird.

In einer Variante des Verfahrens erfolgt das Abtrennen des aufgereinigten Organotetraphosphits aus der Lösung in Schritt c) durch Filtration.

In einer Variante des Verfahrens weist das Organotetraphosphit, das in Schritt a) mit der das zumindest eine Lösungsmittel und die zumindest eine Base enthaltenden Lösung kontaktiert wird, einen Chlorgehalt von 1.500 ppm bis 100.000 ppm auf.

In einer weiteren Variante des Verfahrens weist das Organotetraphosphit, das in Schritt a) mit der das zumindest eine Lösungsmittel und die zumindest eine Base enthaltenden Lösung kontaktiert wird, einen Chlorgehalt von 5.000 ppm bis 100.000 ppm auf.

Die angegebenen Chlorgehalte verstehen sich als Gesamtchlorgehalte.
Der Gesamtchlorgehalt wird nach Wickbold bestimmt: Probenvorbereitung nach DIN 51408 und Messung per lonenchromatographie nach DIN EN ISO 10304.

In einer Variante des Verfahrens zur Reduktion des Chlorgehalts wird ein Organotetraphosphit einer der allgemeinen Formeln **I** oder **II:** 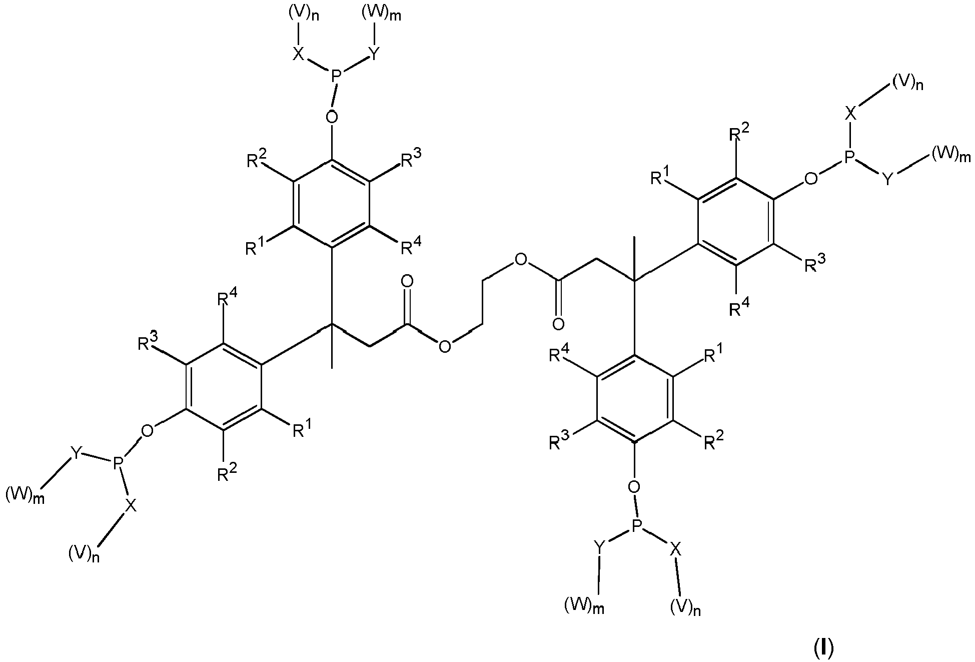 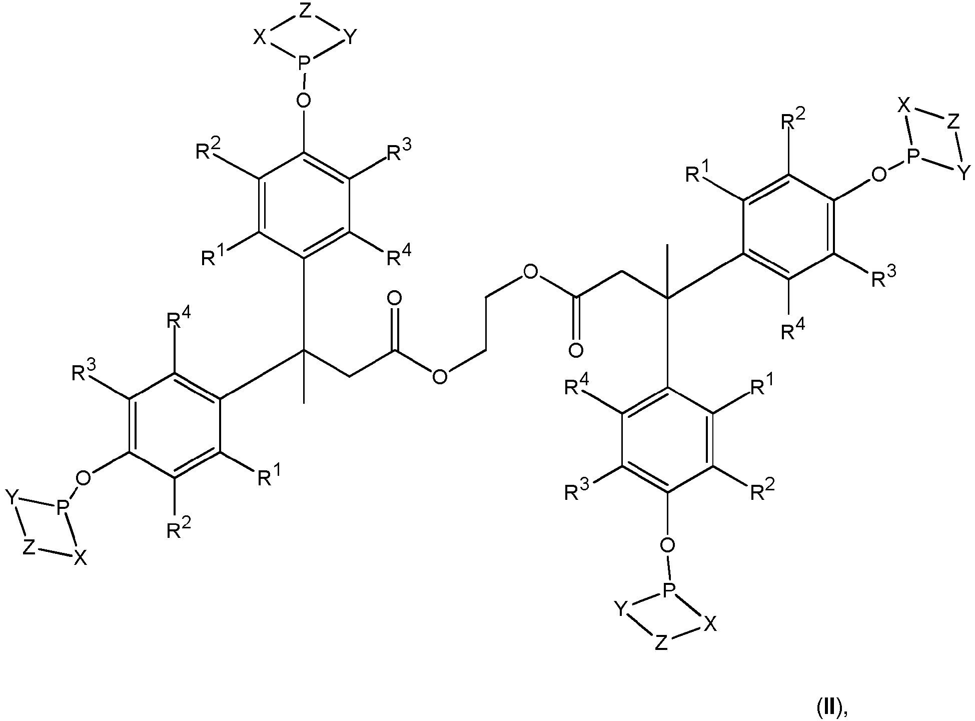 aufgereinigt,
wobei
R² *tert*-Butyl ist und wobei R¹, R³ und R⁴ -H sind.

Besonders bevorzugt dient das erfindungsgemäße Verfahren zur Aufreinigung von Organotetraphosphiten einer der Strukturformeln **III, IV, V, VI, VII, VIII, IX, X, XI, XII, XIII, XIV** und **XV:**

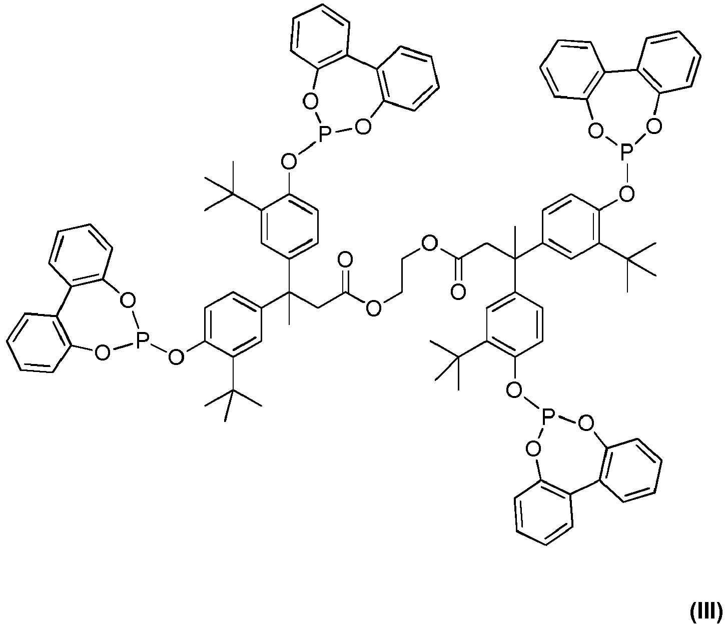

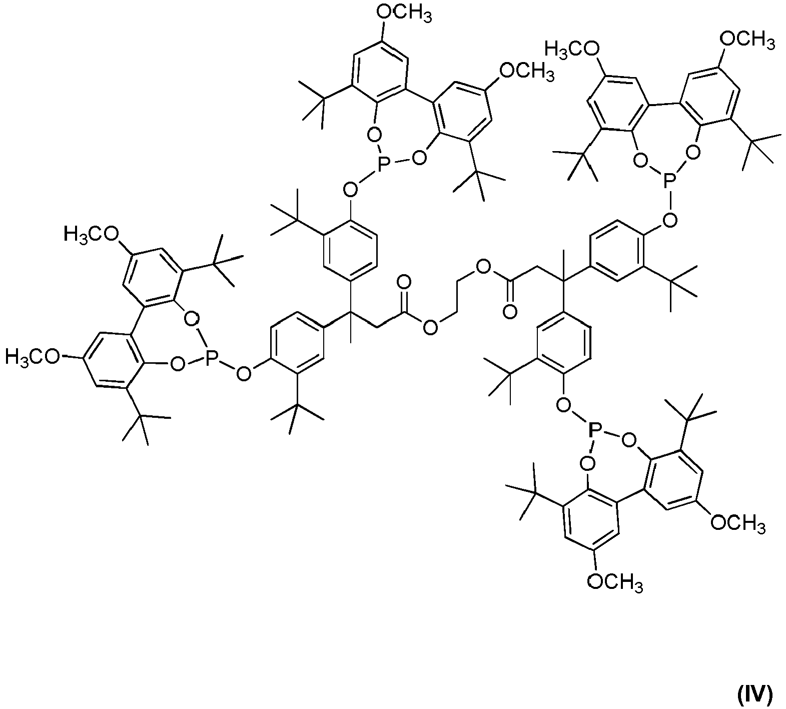

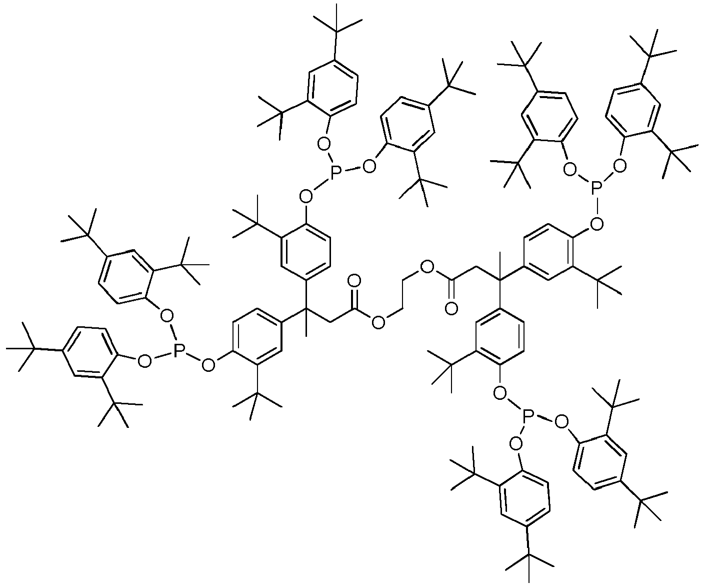

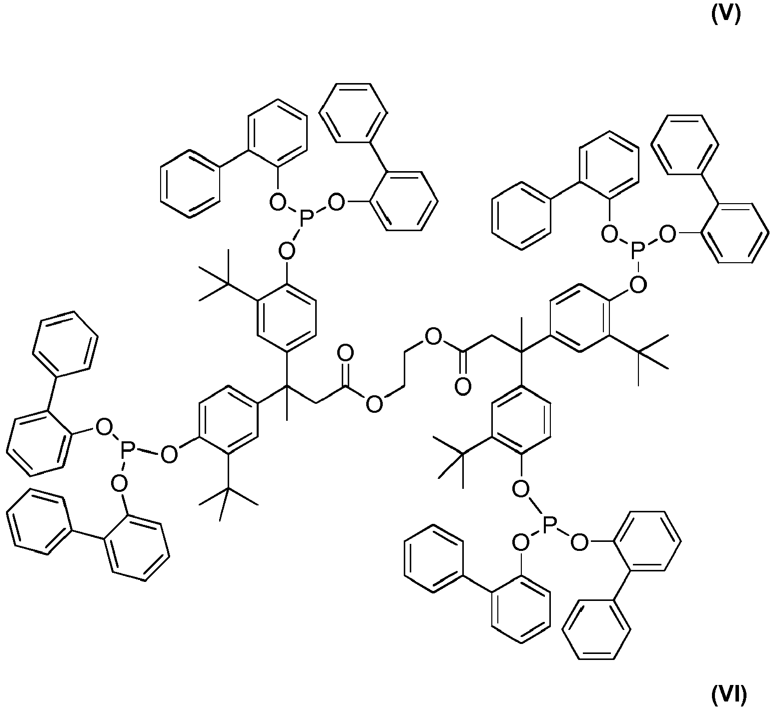

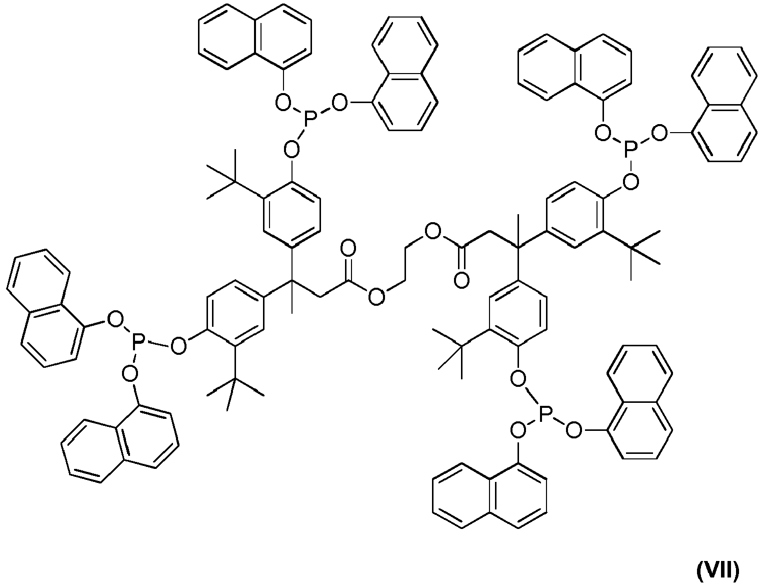

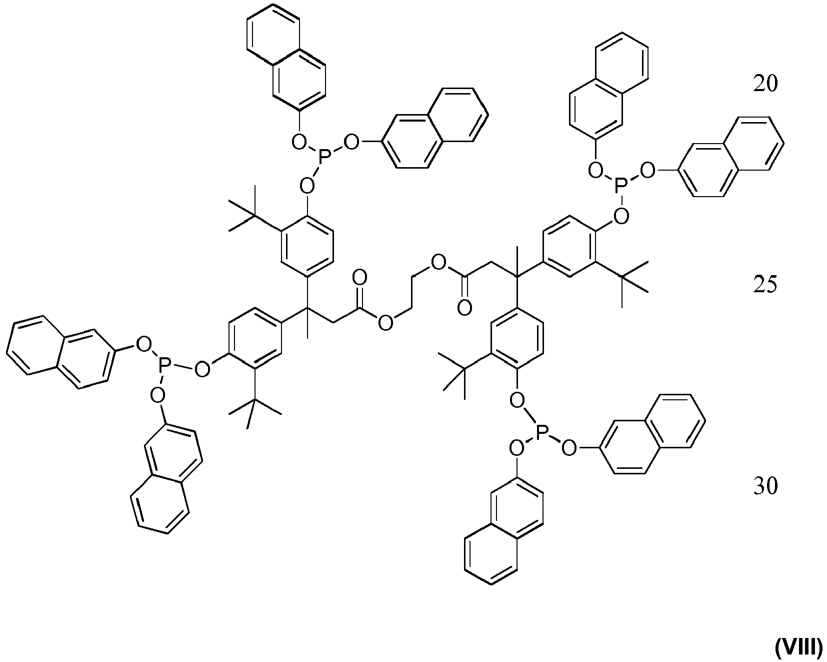

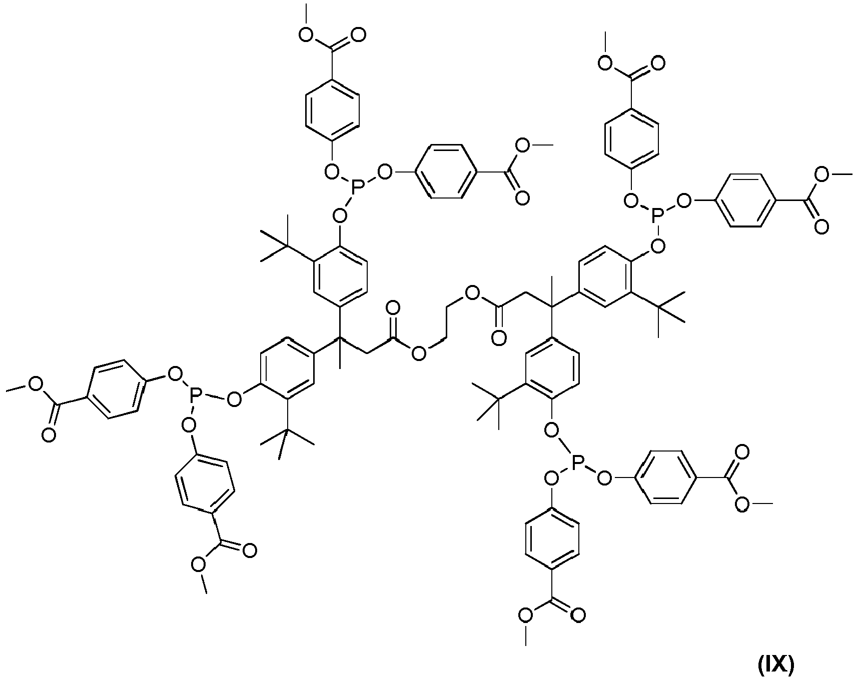

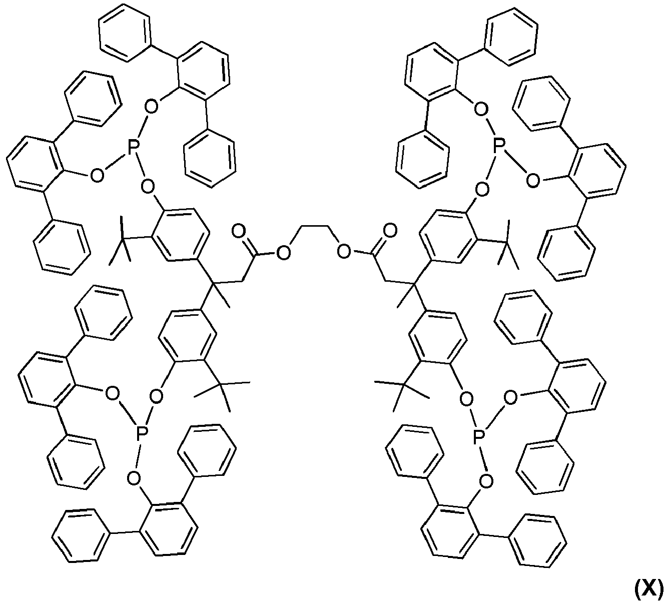

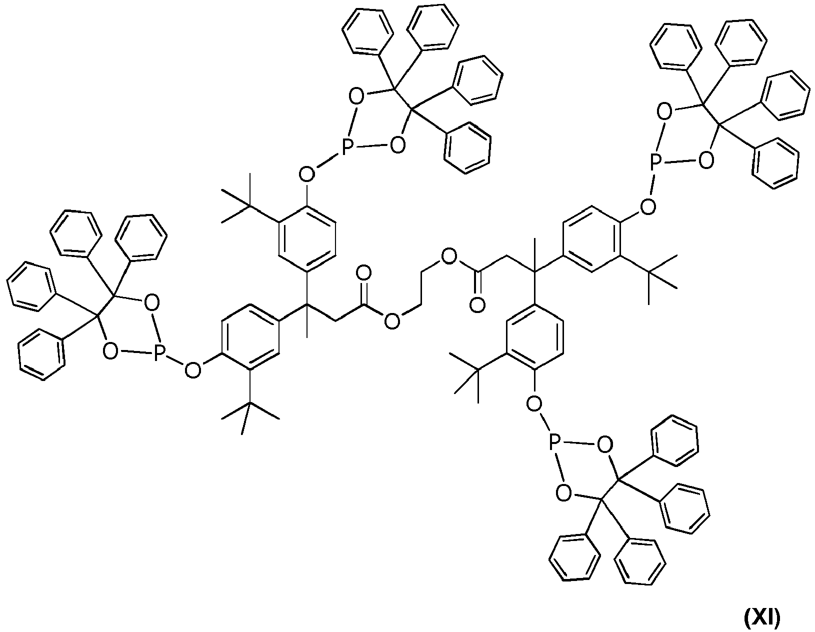

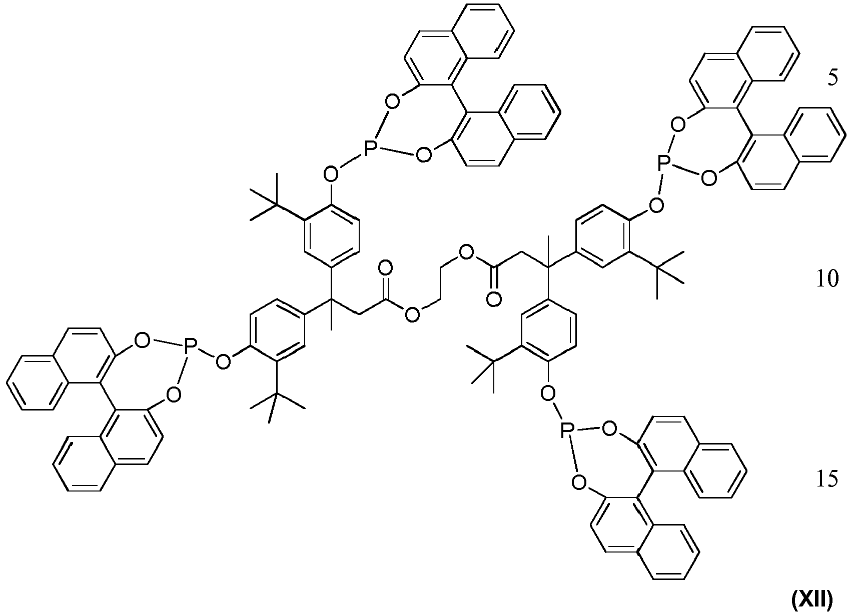

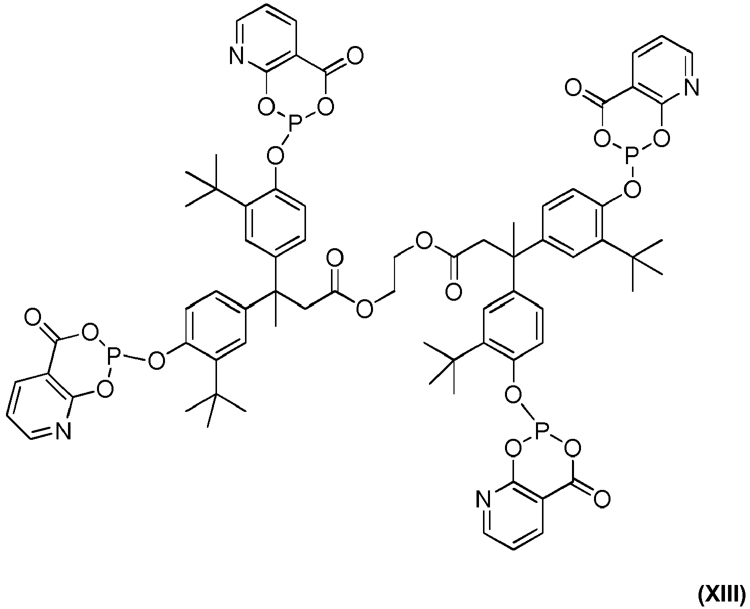

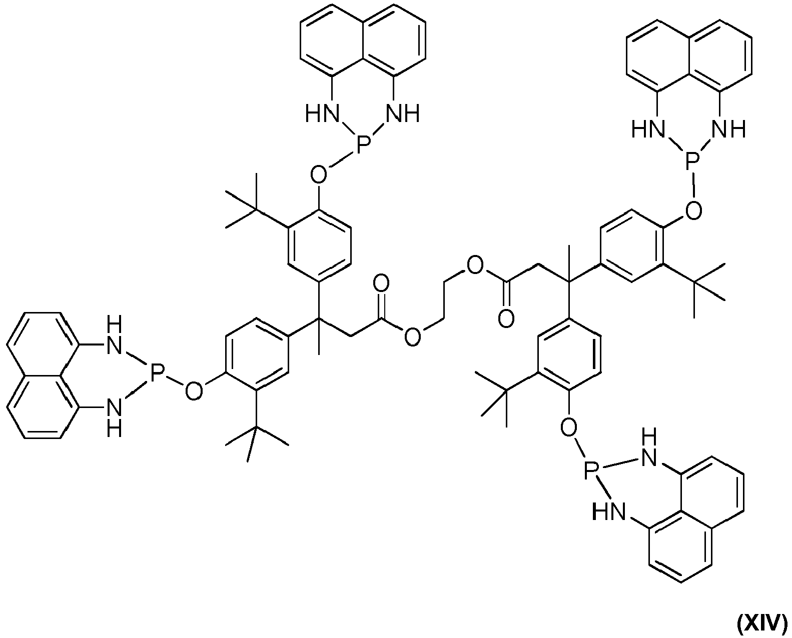

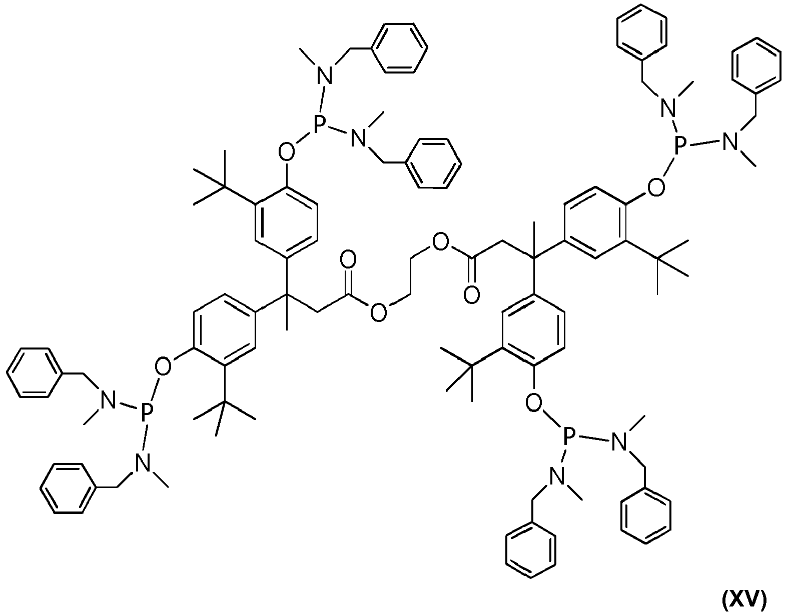

Dem beanspruchten Verfahren können auch Verfahrensschritte vorgelagert sein, wie beispielsweise die Synthese der Organotetraphosphite. Diese Verfahrensschritte erfolgen dann vor dem Verfahrensschritt a).

Bei einer dem Verfahrensschritt a) vorgelagerten Synthese des Liganden kann das Organotetraphosphit nach erfolgter Auskristallisation isoliert werden. Dies geschieht typischerweise durch Abfiltrieren und, optional, Trocknen des abfiltrierten Organotetraphsophits.

Im Folgenden soll die Erfindung anhand von Ausführungsbeispielen näher erläutert werden.

### Allgemeine Arbeitsvorschriften

Der in Zusammenhang mit dieser Erfindung angegebene Gesamtchlorgehalt wird nach Wickbold bestimmt: Probenvorbereitung nach DIN 51408 und Messung per lonenchromatographie nach DIN EN ISO 10304.

Alle nachfolgenden Präparationen wurden mit Standard-Schlenk-Technik unter Schutzgas durchgeführt. Die Lösungsmittel wurden soweit nicht anders angegeben vor Gebrauch über geeigneten Trocknungsmitteln getrocknet (Purification of Laboratory Chemicals, W. L. F. Armarego (Autor), Christina Chai (Autor), Butterworth Heinemann (Elsevier), 6. Auflage, Oxford 2009). Phosphortrichlorid (Aldrich) wurde vor dem Einsatz unter Argon destilliert. Alle präparativen Arbeiten erfolgten in ausgeheizten Gefäßen. Die Charakterisierung der Produkte erfolgte mittels NMR-Spektroskopie. Chemische Verschiebungen werden in ppm angegeben.
Die Referenzierung der ³¹P-NMR-Signale erfolgte gemäß: SR_{31P} = SR_{1H} * (BF_{31P} / BF_{1H}) = SR_{1H} * 0,4048. (Robin K. Harris, Edwin D. Becker, Sonia M. Cabral de Menezes, Robin Goodfellow, and Pierre Granger, Pure Appl. Chem., 2001, 73, 1795-1818; Robin K. Harris, Edwin D. Becker, Sonia M. Cabral de Menezes, Pierre Granger, Roy E. Hoffman and Kurt W. Zilm, Pure Appl. Chem., 2008, 80, 59-84).
Die Aufnahme von Kernresonanzspektren erfolgte an Bruker Avance 300 bzw. Bruker Avance 400, die gaschromatografische Analyse an Agilent GC 7890A, die Elementaranalyse an Leco TruSpec CHNS und Varian ICP-OES 715, und die ESI-TOF Massenspektrometrie an Thermo Electron Finnigan MAT 95-XP und Agilent 6890 N/5973 Geräten.
Hostanox 03 (Bis[3,3-bis-(4'-hydroxy-3'-tert-butylphenyl)butanosäure]-glycolester bzw. Ethylenbis[3,3-bis(3-tert-butyl-4-hydroxyphenyl)butyrat]) ist kommerziell erhältlich und wurde von Clariant bezogen.

In Ergänzung zu den nachstehenden Synthesevorschriften ist die Herstellung von Organotetraphosphiten mit einer Hostanox O3-Leitstruktur (Bis[3,3-bis-(4'-hydroxy-3'-tert-butylphenyl)butanosäure]-glycolester bzw. Ethylen-bis[3,3-bis(3-tert-butyl-4-hydroxyphenyl)butyrat]) auch detailliert in WO 2014/177355 A1 beschrieben.

Bei den in den Beispielen 3a, 4 bis 8 sowie 11 bis 13 beschriebenen Synthesen der Organotetraphosphite **V, VI, VII, VIII, IX, X, XIII, XIV** und **XV** wird als Edukt jeweils das Chlorophosphit **(10)** eingesetzt:

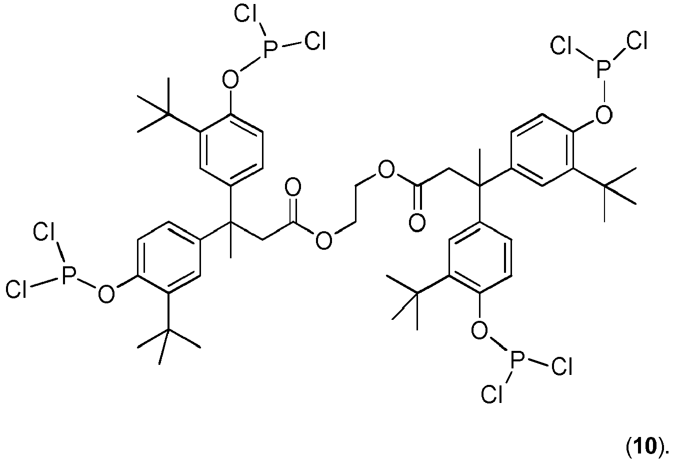

Das Chlorophosphit **(10)** wurde folgendermaßen erhalten:
Eine Lösung von Phosphortrichlorid (0,66 g; 4,81 mmol) in THF (3 ml) wird bei 0 °C unter Rühren tropfenweise mit einer Mischung aus Hostanox 03 (Ethylenbis[3,3-bis(3-tert-butyl-4-hydroxyphenyl)butyrat]) (0,796 g; 1,001 mmol), Triethylamin (1,12 ml) und THF (30 ml) versetzt. Man lässt über Nacht bei Raumtemperatur rühren, filtriert, engt das Filtrat im Vakuum ein und trocknet den erhaltenen Rückstand 2 h bei 50 °C / 0,1 mbar. Das Produkt wird in Toluol (15 ml) gelöst, die Lösung über eine G4-Fritte filtriert und erneut zur Trockne eingeengt.
Ausbeute: 0,935 g (0,78 mmol; 78 %). Das so erhaltene Produkt wurde direkt weiterverwendet. ³¹P-NMR (CD₂Cl₂): 185,8 (s) ppm. ¹H-NMR (CD₂Cl₂): 1,35 (36 H); 1,89 (6 H); 3,13 (4 H); 3,89 (4 H), 7,08...7,43 (12 H) ppm.

### Beispiel 1: Synthese von (III):

Eine gerührte Lösung von 6-Chlordibenzo[*d,f*][1,3,2]dioxaphosphepin (0,548 g; 2,188 mmol) in THF (4 ml) wird bei 0 °C tropfenweise mit einer Mischung aus Hostanox 03 (Ethylenbis[3,3-bis(3-tert-butyl-4-hydroxyphenyl)butyrat]) (0,395 g; 0,497 mmol), Triethylamin (0,62 ml) und THF (6 ml) versetzt. Man lässt über Nacht bei Raumtemperatur rühren, filtriert, engt das Filtrat im Vakuum ein und trocknet den erhaltenen Rückstand 2 h bei 50 °C / 0,1 mbar.

Die säulenchromatografische Reinigung (Hexan/Dichlormethan, 1:4, R*_{f}* = 0,4) ergibt 0,449 g (0,272 mmol; 54 %) des Tetraphosphites (**III**)**.**

Analyse (ber. für C₉₈H₉₄O₁₆P₄ = 1651,68 g/Mol): C 71,41 (71,26) %; H 5,73 (5,74) %; P 7,53 (7,50) %.

³¹P-NMR (CD₂Cl₂): 145,4 (s) ppm. ¹H-NMR (CD₂Cl₂): 1,37 (36 H); 1,92 (6 H); 3,17 (4 H); 3,93 (4 H); 7,07...7,59 (44 H) ppm.

ESI-TOF HRMS: m/e 1652,55888 (M+H)⁺.

### Beispiel 2: Synthese von (IV):

Eine gerührte Lösung von 4,8-Di-tert-butyl-6-chlor-2,10-dimethoxydibenzo[d,*f*][1,3,2]-dioxaphosphepin (2,387 g; 5,644 mmol) in THF (12 ml) wird bei 0 °C tropfenweise mit einer Mischung aus Hostanox 03 (Ethylenbis[3,3-bis(3-tert-butyl-4-hydroxyphenyl)butyrat]) (1,019 g; 1,282 mmol), Triethylamin (1,6 ml) und THF (12 ml) versetzt. Man lässt über Nacht bei Raumtemperatur rühren, filtriert, engt das Filtrat im Vakuum ein und trocknet den erhaltenen Rückstand 2 h bei 50 °C / 0,1 mbar.

Die säulenchromatografische Reinigung (Hexan/Dichlormethan, 1:8, R*_{f}*= 0,28) ergibt 1,437 g (0,614 mmol; 48 %) des Tetraphosphites (**IV**).

Analyse (ber. für C₁₃₈H₁₇₄O₂₄P₄ = 2340,74 g/Mol): C 70,82 (70,81) %; H 7,57 (7,49) %; P 5,19 (5,29) %.

³¹P-NMR (CD₂Cl₂): 139,9 (s) ppm.¹H-NMR (CD₂Cl₂): 1,27 (36 H); 1,43 (72 H); 1,93 (6 H); 3,16 (4 H); 3,88 (24 H), 3,93 (4 H), 6,83...7,17 (28 H) ppm.

ESI-TOF HRMS: *m*/*e* 2341,14642 (M+H)⁺.

### Beispiel 3: Synthese von (V):

Eine gerührte Lösung von Bis(2,4-di-tert-butylphenyl)phosphorochloridit (3,381 g; 7,086 mmol) in THF (15 ml) wird bei 0 °C tropfenweise mit einer Mischung aus Hostanox 03 (Ethylenbis[3,3-bis(3-tert-butyl-4-hydroxyphenyl)butyrat]) (1,280 g; 1,61 mmol), Triethylamin (2 ml) und THF (15 ml) versetzt. Man lässt über Nacht bei Raumtemperatur rühren, filtriert, engt das Filtrat im Vakuum ein und trocknet den erhaltenen Rückstand 2 h bei 50 °C / 0,1 mbar.

Die säulenchromatografische Reinigung (Hexan/Dichlormethan, 1:1, R*_{f}*= 0,57) ergibt 3,6 g (1,41 mmol; 87%) des Tetraphosphites **(V).**

Analyse (ber. für C₁₆₂H₂₃₀O₁₆P₄ = 2557,44 g/Mol): C 76,26 (76,08) %; H 9,05 (9,06) %; P 4,93 (4,84) %.

³¹P-NMR (CD₂Cl₂): 130,7 (s) ppm. ¹H-NMR (CD₂Cl₂): 1,37 (72 H); 1,39 (36 H); 1,47 (72 H); 1,91 (6 H); 3,16 (4 H); 3,92 (4 H), 7,00...7,47 (36 H) ppm.

ESI-TOF HRMS: *m*/*e* 518,37751; 647,46192; 1135,27566.

### Beispiel 3a: Alternative Synthese von (V):

In einem 250 ml Schlenkkolben wurden 9,2 g (0,044 mol) 2,4-Di-*tert-*Butylphenol mit 140 ml getrocknetem Toluol und 7 ml (0,050 mol) Triethylamin versetzt.

In einem 500 ml Schlenkkolben wurden 7,2 g (0,005 mol) des Chlorophosphits **(10)** in 110 ml getrocknetem Toluol gelöst und im Eisbad auf 0 °C gekühlt.

Die 2,4-Di-*tert*-Butylphenol/Toluol/Et₃N-Lösung wurde langsam zu der zuvor auf 0 °C heruntergekühlten Chlorophosphit/Toluol-Lösung getropft.

Nach vollständiger Zugabe wurde langsam und unter Rühren über Nacht auf Raumtemperatur erwärmt.

Zur Aufarbeitung wurde das erhaltene Aminhydrochlorid abfiltriert. Der erhaltene Rückstand wurde mit 30 ml getrocknetem Toluol gewaschen. Die erhaltene Mutterlauge wurde unter vermindertem Druck bis zur Trockne eingeengt.

Ausbeute: 12,5 g

Chlorgehalt Titration: 0,21/0,21 Gew.-%

### Beispiel 4: Synthese von (VI):

Eine Lösung des Chlorophosphits **(10)** (0,441 g; 0,367 mmol) in Toluol (5 ml) wird bei 0 °C tropfenweise unter Rühren mit einer Lösung von 2-Phenylphenol (0,5 g; 2,938 mmol) in einer Mischung aus Toluol (7 ml) und Triethylamin (3,7 ml) versetzt. Man lässt über Nacht bei Raumtemperatur rühren, filtriert, engt das Filtrat im Vakuum ein und trocknet den erhaltenen Rückstand 2 h bei 50 °C / 0,1 mbar.

Die säulenchromatografische Reinigung (Dichlormethan, R*_{f}*= 0,82) ergibt 0,541 g (0,239 mmol; 65 %) des Tetraphosphites (**VI**).

Analyse (ber. für C₁₄₆H₁₃₄O₁₆P₄ = 2268,54 g/Mol): C 77,34 (77,30) %; H 5,98 (5,96) %; P 5,85 (5,46) %.

³¹P-NMR (CD₂Cl₂): 129,9 (s) ppm. ¹H-NMR (CD₂Cl₂): 1,16 (36 H); 1,85 (6 H); 3,06 (4 H); 3,89 (4 H), 6,76...7,44 (84 H) ppm.

ESI-TOF HRMS: m/e 2290,8538 (M+Na)⁺.

### Beispiel 5: Synthese von (VII):

Eine Lösung des Chlorophosphits **(10)** (0,612 g; 0,511 mmol) in Toluol (5 ml) wird bei 0 °C tropfenweise unter Rühren mit einer Lösung von 1-Naphthol (0,589 g; 4,084 mmol) in einer Mischung aus Toluol (12 ml) und Triethylamin (5,2 ml) versetzt. Man lässt über Nacht bei Raumtemperatur rühren, filtriert, engt das Filtrat im Vakuum ein und trocknet den erhaltenen Rückstand 2 h bei 50 °C / 0,1 mbar.

Die säulenchromatografische Reinigung (Dichlormethan, R*_{f}*= 0,77) ergibt 0,629 g (0,305 mmol; 60 %) des Tetraphosphites (**VII**).

Analyse (ber. für C₁₃₀H₁₁₈O₁₆P₄ = 2060,24 g/Mol): C 75,67 (75,79) %; H 5,99 (5,77) %; P 6,01 (6,01)%.

³¹P-NMR (CD₂Cl₂): 131,3 (s) ppm. ¹H-NMR (CD₂Cb): 1,33 (36 H); 1,89 (6 H); 3,11 (4 H); 3,87 (4 H), 6,98...8,19 (84 H) ppm.

ESI-TOF HRMS: *m*/*e* 2082,72565 (M+Na)⁺.

### Beispiel 6: Synthese von (VIII):

Eine Lösung des Chlorophosphits **(10)** (0,612 g; 0,511 mmol) in Toluol (5 ml) wird bei 0 °C tropfenweise unter Rühren mit einer Lösung von 1-Naphthol (0,589 g; 4,084 mmol) in einer Mischung aus Toluol (12 ml) und Triethylamin (5,2 ml) versetzt. Man lässt über Nacht bei Raumtemperatur rühren, filtriert, engt das Filtrat im Vakuum ein und trocknet den erhaltenen Rückstand 2 h bei 50 °C / 0,1 mbar.

Die säulenchromatografische Reinigung (Dichlormethan, R*_{f}*= 0,82) ergibt 0,57 g (0,277 mmol; 54 %) des Tetraphosphites (**VIII**).

Analyse (ber. für C₁₃₀H₁₁₈O₁₆P₄ = 2060,24 g/Mol): C 75,47 (75,79) %; H 5,50 (5,77) %; P 6,23 (6,01)%.

³¹P-NMR (CD₂Cl₂): 129,5 (s) ppm. ¹H-NMR (CD₂Cl₂): 1,34 (36 H); 1,90 (6 H); 3,13 (4 H); 3,89 (4 H), 7,05...7,87 (84 H) ppm.

ESI-TOF HRMS: m/e 2082,72637 (M+Na)⁺.

### Beispiel 7: Synthese von (IX)

Eine Lösung des Chlorophosphits **(10)** (0,734 g; 0,613 mmol) in Toluol (6 ml) wird bei 0 °C tropfenweise unter Rühren mit einer Lösung von 4-Hydroxybenzoesäuremethylester (0,746 g; 4,901 mmol) in einer Mischung aus Toluol (14 ml) und Triethylamin (6,2 ml) versetzt. Man lässt über Nacht bei Raumtemperatur rühren, filtriert und engt das Filtrat im Vakuum ein. Der erhaltene Rückstand wird zunächst 2 h bei 50 °C / 0,1 mbar getrocknet und dann in trockenem, siedendem Acetonitril (10 ml) aufgenommen. Lagerung der Lösung bei -23 °C ergibt 0,847 g (0,399 mmol; 65 %) des Tetraphosphites (**IX**).

Analyse (ber. für C₁₁₄H₁₁₈O₃₂P₄ = 2124,05 g/Mol): C 64,50 (64,46) %; H 5,50 (5,60) %; P 5,85 (5,83)% %.

³¹P-NMR (CD₂Cl₂): 128,4 (s) ppm. ¹H-NMR (CD₂Cl₂): 1,29 (36 H); 1,88 (6 H); 3,13 (4 H); 3,89 (4 H), 3,91 (24 H); 6,87...8,06 (44 H) ppm.

ESI-TOF HRMS: m/e 2146,64606 (M+Na)⁺.

### Beispiel 8: Synthese von (X)

Eine Lösung des Chlorophosphits **(10)** (0,573 g; 0,478 mmol) in Toluol (4 ml) wird bei 0 °C tropfenweise unter Rühren mit einer Lösung von 2,6-Diphenylphenol (0,942 g; 3,826 mmol) in einer Mischung aus Toluol (12 ml) und Triethylamin (5,9 ml) versetzt. Man rührt zunächst über Nacht bei Raumtemperatur, anschließend 4 h bei 70 °C und noch 2 h bei 100 °C Badtemperatur. Man filtriert und engt das Filtrat im Vakuum ein. Der erhaltene Rückstand wird 2 h bei 50 °C / 0,1 mbar getrocknet.

Die säulenchromatografische Reinigung (Hexan/Dichlormethan (1:1), R*_{f}*= 0,16) ergibt 0,392 g (0,136 mmol; 28 %) des Tetraphosphites **(X).**

Analyse (ber. für C₁₉₄H₁₆₆O₁₆P₄ = 2877,32 g/Mol): C 80,81 (80,98) %; H 5,92 (5,81) %; P 4,19 (4,31) %.

³¹P-NMR (CD₂Cl₂): 142,4 (s) ppm. ¹H-NMR (CD₂Cl₂): 1,05 (36 H); 1,82 (6 H); 3,04 (4 H); 4,04 (4 H); 5,79...7,64 (116 H) ppm.

ESI-TOF HRMS: m/e 2900,11232 (M+Na)⁺.

### Beispiel 9: Synthese von (XI)

Eine gerührte Lösung von 2-Chlor-4,4,5,5-tetraphenyl-1,3,2-dioxaphospholan (1,074 g; 2,493 mmol) in THF (6 ml) wird bei 0 °C tropfenweise mit einer Lösung von Hostanox 03 (Ethylenbis[3,3-bis(3-tert-butyl-4-hydroxyphenyl)butyrat]) (0,451 g; 0,567 mmol) in Triethylamin (0,71 ml) und THF (7 ml) versetzt. Man rührt zunächst über Nacht bei Raumtemperatur und anschließend 10 h bei 70 °C, filtriert und engt das Filtrat im Vakuum ein. Der erhaltene Rückstand wird 2 h bei 50°C / 0,1 mbar getrocknet und anschließend aus Acetonitril kristallisiert. Ausbeute: 0,66 g (0,278 mmol; 49 %) an 92%-igem Produkt (Bilanz: P-NMR).

³¹P-NMR (CD₂Cl₂): 138,5 (s) ppm. ¹H-NMR (CD₂Cl₂): 1,20 (36 H); 1,90 (6 H); 3,15 (4 H); 3,91 (4 H); 6,92...7,63 (92 H) ppm.

ESI-TOF HRMS: m/e 2393,91863 (M+Na)⁺.

### Beispiel 10: Synthese von (XII)

Eine gerührte Lösung von *R*-4-Chlorodinaphtho[2,1-d:1',2'-f][1,3,2]dioxaphosphepin (1,143 g; 3,259 mmol) in THF (8 ml) wird bei 0 °C tropfenweise mit einer Lösung von Hostanox 03 (Ethylenbis[3,3-bis(3-tert-butyl-4-hydroxyphenyl)butyrat]) (0,589 g; 0,741 mmol) in Triethylamin (0,93 ml) und THF (9 ml) versetzt. Man rührt über Nacht bei Raumtemperatur, filtriert und engt das Filtrat im Vakuum ein. Der erhaltene Rückstand wird 2 h bei 50 °C / 0,1 mbar getrocknet. Die säulenchromatografische Reinigung (Dichlormethan, R*_{f}* = 0,71) ergibt 1,128 g (0,550 mmol; 74 %) des Tetraphosphites (**XII**).

Analyse (ber. für C₁₃₀H₁₁₀O₁₆P₄ = 2052,15 g/Mol): C 75,90 (76,09) %; H 5,56 (5,40) %; P 6,14 (6,04) %.

³¹P-NMR (CD₂Cl₂): 145,6 (s) ppm. ¹H-NMR (CD₂Cl₂): 1,34 (36 H); 1,91 (6 H); 3,16 (4 H); 3,93 (4 H); 7,07...8,08 (60 H) ppm.

### Beispiel 11: Synthese von (XIII)

Eine Lösung des Chlorophosphits **(10)** (1,121 g; 0,936 mmol) in Toluol (7 ml)wird bei 0 °C tropfenweise unter Rühren mit einer Lösung von 2-Hydroxynicotinsäure (0,506 g; 3,742 mmol) in einer Mischung aus Toluol (13 ml) und Triethylamin (5,6 ml) versetzt. Man rührt über Nacht bei Raumtemperatur, filtriert und engt das Filtrat im Vakuum ein. Der erhaltene Rückstand wird 2 h bei 50 °C / 0,1 mbar getrocknet und wie erhalten verwendet. Ausbeute: 0,67 g (0,458 mmol; 49 %).

Analyse (ber. für C₇₄H₇₄N₄O₂₀P₄ = 1463,30 g/Mol): C 60,92 (60,74) %; H 5,02 (5,10) %; P 8,57 (8,47) %.

³¹P-NMR (CD₂Cl₂): 115,1 (s) ppm. ¹H-NMR (CD₂Cl₂): 1,18 (36 H); 1,84 (6 H); 3,08 (4 H); 3,85 (4 H); 7,00...8,63 (24 H) ppm.

### Beispiel 12: Synthese von (XIV)

Eine Lösung des Chlorophosphits **(10)** (1,356 g; 1,144 mmol) in Toluol (9 ml) wird bei 0 °C tropfenweise unter Rühren mit einer Mischung von 1,8-Diaminonaphthalin (0,724 g; 4,577 mmol), Toluol (18 ml) und Triethylamin (7,1 ml) versetzt. Man rührt über Nacht bei Raumtemperatur, filtriert und engt das Filtrat im Vakuum ein. Der erhaltene Rückstand wird 2 h bei 50 °C / 0,1 mbar getrocknet und wie erhalten verwendet. Ausbeute: 0,500 g (0,325 mmol; 28 %).

Analyse (ber. für C₉₀H₉₄N₈O₈P₄ = 1539,68 g/Mol): C 70,46 (70,21) %; H 6,15 (6,15) %; P 7,95 (8,05) %.

³¹P-NMR (CD₂Cl₂): 82,2 (s) ppm. ¹H-NMR (CD₂Cl₂): 1,04 (36 H); 1,82 (6 H); 3,08 (4 H); 3,65 (4 H); 5,72 (m, 8 H); 6,51...7,25 (36 H) ppm.

ESI-TOF HRMS: m/e 1577,57657 (M+Na)⁺.

### Beispiel 13: Synthese von (XV)

Eine Lösung des Chlorophosphits **(10)** (1,585 g; 1,323 mmol) in Toluol (20 ml) wird bei 0 °C tropfenweise unter Rühren mit einer Lösung von *N*-Benzylmethylamin (1,282 g; 10,581 mmol) in einer Mischung aus Toluol (17 ml) und Triethylamin (13,4 ml) versetzt. Man rührt über Nacht bei Raumtemperatur, filtriert und engt das Filtrat im Vakuum ein. Der erhaltene Rückstand wird 2 h bei 50 °C / 0,1 mbar getrocknet und anschließend mit Diethylether (10 ml) verrührt. Filtration und Einengen des Filtrates im Vakuum erbringen das Produkt als weißen Feststoff. Ausbeute: 1,62 g (0,863 mmol; 65 %).

Analyse (ber. Für C₁₁₄H₁₄₂N₈O₈P₄ = 1876,29 g/Mol): C 72,83 (72,97) %; H 7,65 (7,63) %; N 6,08 (5,97) %; P 6,76 (6,60) %.

³¹P-NMR (CD₂Cl₂): 128,9 (s) ppm. ¹H-NMR (CD₂Cl₂): 1,47 (36 H); 1,97 (6 H); 2,68 (d, ³*J*_{HP} = 6,9 Hz; 24 H), 3,21 (4 H); 3,97 (4 H); 4,23 (dd, ³*J*_{HP} = 8,5 Hz; ²*J*_{HH} = 14,7 Hz; 8 H); 4,40 (dd, ³*J*_{HP} = 8,5 Hz; ²*J*_{HH} = 14,7 Hz; 8 H); 7,05...7,39 (52 H) ppm.

### Erfindungsgemäßes Beispiel 14: Chlorreduzierung von (V)

### a) Chlorentfernung mittels entgastem Ethanol + 1 % entgastem Wasser + 5 % entgastem DMAB bei 0 °C

Zur Chlorentfernung wurden zu 10 g des Rohliganden **(V)** mit einem Ausgangschlorwert von 0,2 Gew.-% unter Rühren zunächst 50 ml entgastes Ethanol und 2,5 ml entgastes *N,N'*-Dimethylaminobutan gegeben und 1 h gerührt. Danach wurden 0,5 ml entgastes Wasser zugegeben, auf 0 °C abgekühlt und die Suspension 2 h gerührt. Anschließend wurde der Feststoff abfiltriert, zweimal mit 40 ml kaltem, entgastem Ethanol nachgewaschen und getrocknet. Ausbeute: 8,2 g (82 %)

Chlorgehalt Titration: 230 mg/ kg (ppm)

### b) Chlorentfernung mittels entgastem Ethanol + Triethylamin bei 0 °C

Zur Chlorentfernung wurden zu 28,5 g des Rohliganden **(V)** mit einem Ausgangschlorwert von 0,2 Gew.-% unter Rühren 600 ml entgastes Ethanol und 0,1 ml Triethylamin gegeben. Die Mischung wurde 3 h gerührt, dann mittels Eisbad auf 0 °C abgekühlt und nochmals 1 h gerührt. Der Feststoff wurde abfiltriert, mit 50 ml entgastem, gekühltem Ethanol nachgewaschen und getrocknet.

Ausbeute: 20,05 g = 72 %

Chlorgehalt (Wickbold): 100 mg/ kg (ppm)

### c) Chlorentfernung mittels entgastem Ethanol + Triethylamin bei 0 °C

Zur Chlorentfernung wurden zu 28,5 g des Rohliganden **(V)** mit einem Ausgangschlorwert von 0,2 Gew.-% unter Rühren 600 ml entgastes Ethanol und 0,2 ml Triethylamin gegeben. Die Mischung wurde 3 h gerührt, dann mittels Eisbad auf 0 °C abgekühlt und nochmals 1 h gerührt. Der Feststoff wurde abfiltriert, mit 50 ml entgastem, gekühltem Ethanol nachgewaschen und getrocknet.

Ausbeute: 20,05 g = 72 %

Chlorgehalt (Wickbold): 80 mg/ kg (ppm)

### Erfindungsgemäßes Beispiel 15: Synthese von (V) mit ungetrocknetem Toluol als Lösungsmittel und anschließender Chlorentfernung

In einem 500 ml Schlenkkolben wurden 36,9 g (0,177 mol) 2,4-Di-*tert*-Butylphenol mit 300 ml entgastem, nicht getrocknetem Toluol und 28 ml (0,202 mol) Triethylamin versetzt.

In einem 2000 ml Schlenkkolben wurden 28,9 g (0,022 mol) des Chlorophosphits **(10)** mit 300 ml entgastem Toluol versetzt und auf 0 °C im Eisbad gekühlt.

Die 2,4-Di-*tert*-Butylphenol/Toluol/Et₃N-Lösung wurde langsam zu der auf 0 °C heruntergekühlten Chlorophosphit/Toluol-Lösung getropft. Nach vollständiger Zugabe wurde die Reaktionsmischung unter Rühren über Nacht auf Raumtemperatur gebracht.

Am nächsten Morgen wurde die Mischung für 30 min. unter kräftigem Rühren auf 40 °C erwärmt. Anschließend wurde für weitere 45 Minuten bei 80 °C gerührt.

Nach dem Abkühlen auf Raumtemperatur wurde das erhaltene Aminhydrochlorid abfiltriert. Der erhaltene Frittenrückstand wurde mit 50 ml entgastem Toluol gewaschen. Die erhaltene Mutterlauge wurde aufgefangen und in einem sekurierten 2 L Schlenkkolben unter vermindertem Druck bis zur Trockne eingeengt.

Zur weiteren Aufarbeitung wurde der erhaltene Rückstand pulverisiert und über Nacht nachgetrocknet. Nach dem Trocknen wurden zum pulverisierten Feststoff 750 ml entgastes Ethanol und 1,5 ml Triethylamin gegeben.

Die Mischung wurde über Nacht bei Raumtemperatur gerührt und im Anschluss mittels Eisbad auf 0 °C abgekühlt und nochmals 2 h gerührt. Der Feststoff wurde filtriert, mit wenig entgastem, gekühltem Ethanol nachgewaschen und getrocknet.

Ausbeute: 36,31 g (63 %)
Chlorgehalt: Wickbold: 75 mg/ kg (ppm)

### Vergleichsbeispiel 16: Chlorreduzierung von (V) mit reinem Wasser

Alternative Herstellung von Verbindung (V):
In einem 1000 ml Schlenkkolben wurden 43,5 g (0,084 mol) Bis(2,4-di-tert.-butylphenyl)phosphorochloridit eingewogen und unter Rühren mit 180 ml getrocknetem Toluol versetzt. Die Lösung wird auf 0 °C abgekühlt.
In einem zweiten 500 ml Schlenkkolben wurden 15,1 g (0,019 mol) Hostanox 03 (Ethylenbis[3,3-bis(3-tert.-4-hydroxyphenyl)butyrat]) mit 210 ml getrocknetem Toluol und 24,78 ml = 18 g (0,176 mol) entgastem Triethylamin unter Rühren versetzt. Diese Edutkmischung löste sich nach ca. 5 Minuten vollständig auf. Es wurde eine klare Lösung erhalten. Die Lösung wurde im Anschluss unter Rühren in die auf 0°C gekühlte Chlorophosphit-Lösung getropft. Die Reaktionsmischung wurde über Nacht bei Rumtemperatur gerührt.
Zur Aufarbeitung wurde das erhaltene Aminhydrochlorid abfiltriert, das Filtrat unter vermindertem Druck bis zur Trockne eingeengt und gut nachgetrocknet.

Ergebnis Rohprodukt: Das NMR Spektrum zeigt ca. 98% P Verbindung (V), sowie weitere kleine Nebenkomponeten.
Chlorgehalt: Titration 0,12 / 0,12 Gew% (= 1200/1200 mg/ kg (ppm)

Vergleichsbeispiel Chlorreduzierung: Von dem Rohprodukt wurden 10 g abgewogen und 30 Minuten mit 100 ml entgastem Wasser (Chromasolv Ware) unter Argon gerührt. Anschließend wurde die heterogene Mixtur abfiltriert, dreimal mit 10 ml Wasser nachgespült und über Nacht am getrocknet.
Ausbeute: 9 g (90%)
31 P-NMR : 88,8% P Verbindung (**V**), 3,8% P Phosphit 1, 0,2% P Phosphit, 4,3% P Phosphit, 2,4% P P-H Oxid, 0,3% P Phosphit
Chlorgehalt: 0,11/0,11 Gew% (= 1100/1200 mg/ kg (ppm)

Die Ergebnisse sind noch einmal in Tabelle 1 zusammengefasst.

**Tabelle 1: Chlorwerte der erfindungsgemäß aufgereinigten Organotetraphosphite**

| | Lösungsmittel | Base*[%] | Wasserzusatz* [%] | Ausbeute [%] | Chlorgehalt [ppm] |
|---|---|---|---|---|---|
| 14a) | Ethanol | 5 | 1 | 82 | 230 |
| 14b) | Ethanol | 0,017 | - | 72 | 100 |
| 14c) | Ethanol | 0,033 | - | 72 | 80 |
| 15) | Ethanol | 0,2 | - | 63 | 75 |
| 16)** | Wasser | - | 100 | 90 | 1100 |

| | | | | | |
|---|---|---|---|---|---|
| * Prozentangaben beziehen sich auf den Gehalt an Lösungsmittel ** Vergleichsbeispiel | | | | | |

Die vorstehenden Beispiele zeigen einerseits, dass durch das erfindungsgemäße Verfahren der Chlorgehalt von Organotetraphosphiten signifikant reduziert werden kann, beispielsweise von einem Ausgangschlorgehalt von ca. 2000 ppm auf einen Endgehalt von < 250 ppm oder auf einen Endgehalt von ≤ 100 ppm.

Wie am Vergleichsbeispiel (Beispiel 16) deutlich wird, führt die Verwendung von reinem Wasser als Lösungsmittel nicht zu dem gewünschten Ergebnis der Chlorreduzierung. Weiterhin zeigt ein Vergleich der ³¹P-NMR Daten dieses Versuches, dass bei der Verwendung von reinem Wasser ca-10% mehr Nebenkomponenten, bedingt durch partielle Hydrolyse, entstanden sind.

Die Beispiele zeigen weiterhin, dass das erfindungsgemäße Verfahren auch in Anwesenheit von Wasserspuren durchgeführt werden kann (vgl. Beispiel 14a, in dem der Chlorgehalt bei einer Ausbeute von 82 % auf 230 ppm reduziert werden konnte). Es können daher in dem Verfahren auch wasserhaltige Lösungsmittel verwendet werden, sodass eine Trocknung der selbigen nicht zwingend erforderlich ist. Wasser kann im Falle von Phosphiten zu Zersetzungen und damit zu Ausbeuteverlusten oder zur Bildung von Nebenkomponenten führen wie das Vergleichsbeispiel zeigt. Dies wird hier, bei Verwendung von wasserhaltigen Lösungsmitteln, nicht beobachtet (vgl. Tabelle 1). Dies bedeutet, dass auf eine aufwendige und kostenintensive Trocknung der Lösungsmittel verzichtet werden kann. Eine großtechnische Synthese wird dadurch deutlich wirtschaftlicher, da ein Trocknen der Lösungsmittel im Vorfeld nicht notwendig ist und somit Syntheseschritte verkürzt werden können.

## Patentansprüche

1. Verfahren zur Reduktion des Chlorgehalts in einem Organotetraphosphit einer der allgemeinen Formeln **I** oder **II**: 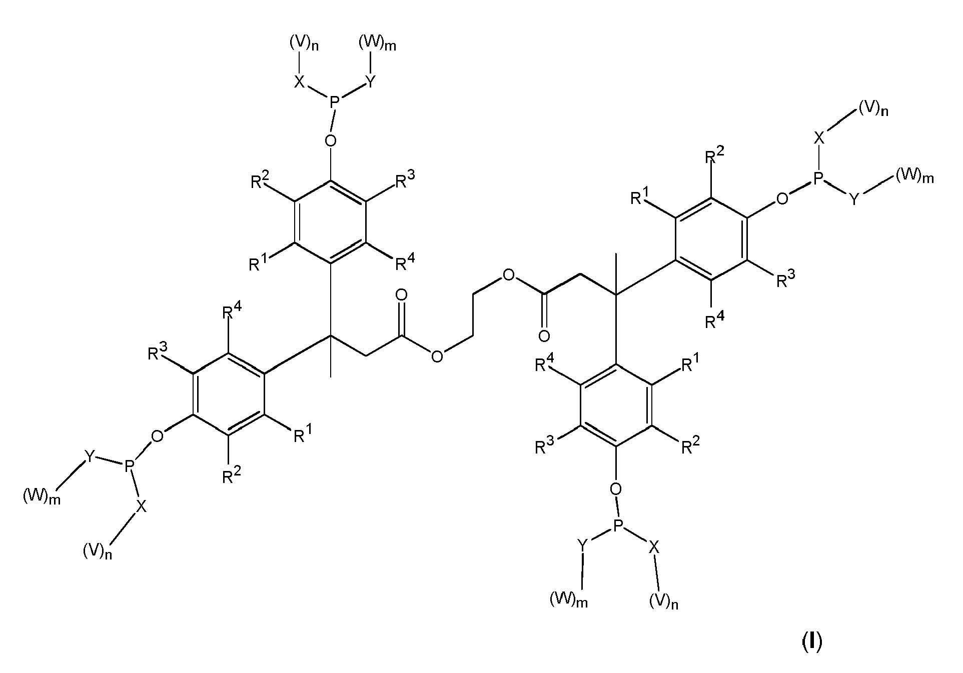 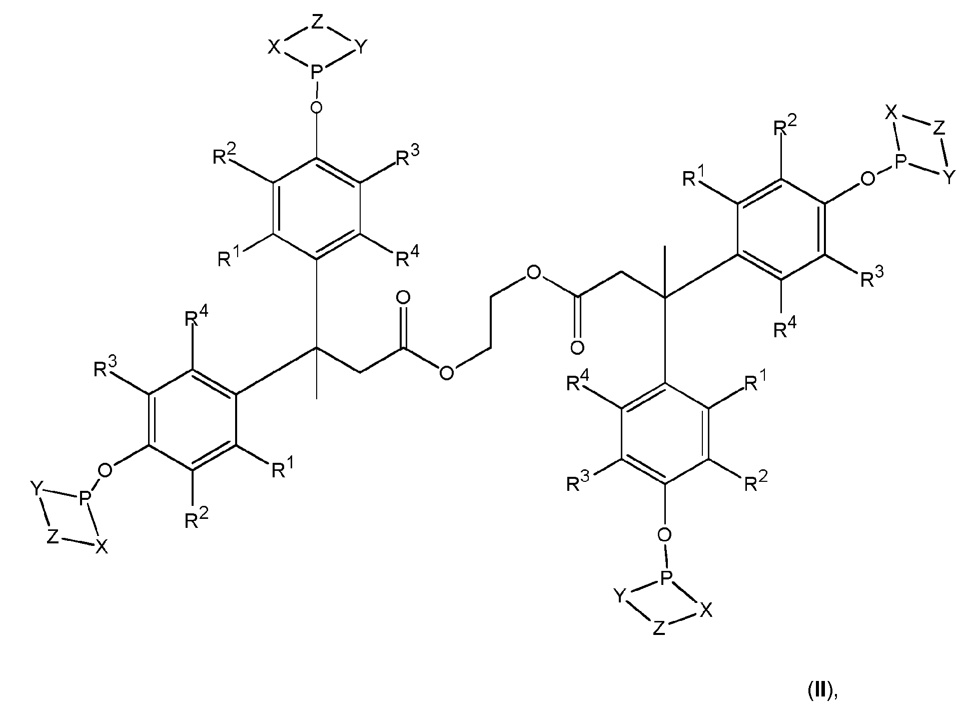 wobei
R¹, R², R³, R⁴ jeweils unabhängig voneinander ausgewählt sind aus: -H, -(C₁-C₁₂)-Alkyl;
V und W jeweils unabhängig voneinander ausgewählt sind aus:
-H, -(C₁-C₁₂)-Alkyl, -O-(C₁-C₁₂)-Alkyl, -(C₁-C₁₂)-Heteroalkyl, -(C₄-C₂₀)-Aryl, -(C₄-C₂₀)-Aryl-(C₁-C₁₂)-Alkyl, -(C₄-C₂₀)-Aryl-O-(C₁-C₁₂)-Alkyl, -(C₁-C₁₂)-Alkyl-(C₄-C₂₀)-Aryl, -(C₄-C₂₀)-Aryl-COO-(C₁-C₁₂)-Alkyl, -(C₄-C₂₀)-Aryl-CONH-(C₁-C₁₂)-Alkyl, , -(C₄-C₂₀)-Aryl-CON[(C₁-C₁₂)-Alkyl]₂, -(C₄-C₂₀)-Heteroaryl, -(C₄-C₂₀)-Heteroaryl-(C₁-C₁₂)-Alkyl, -(C₃-C₁₂)-Cycloalkyl, -(C₃-C₁₂)-Cycloalkyl-(C₁-C₁₂)-Alkyl, -(C₃-C₁₂)-Heterocycloalkyl, -(C₃-C₁₂)-Heterocycloalkyl-(C₁-C₁₂)-Alkyl, -CO-(C₁-C₁₂)-Alkyl, -CO-(C₄-C₂₀)-Aryl, -CO-(C₄-C₂₀)-Heteroalkyl, -(C₄-C₂₀)-Aryl-CO-(C₁-C₁₂)-Alkyl, -(C₄-C₂₀)-Aryl-CO-(C₄-C₂₀)-Aryl;
X und Y jeweils unabhängig voneinander ausgewählt sind aus O und N;
wobei für den Fall, dass X für O steht n = 1 ist,
und für den Fall, dass Y für O steht m = 1 ist,
und für den Fall, dass X für N steht n = 1 oder 2 ist,
und für den Fall, dass Y für N steht m = 1 oder 2 ist;
Z ausgewählt ist aus:
-(C₁-C₁₄)-Alkyl-, -(C₄-C₂₀)-Aryl-, -(C₄-C₂₀)-Aryl-(C₁-C₁₂)-Alkyl-, -(C₁-C₁₄)-Heteroalkyl-, -(C₄-C₂₀)-Heteroaryl-, -CO-(C₄-C₁₄)-Heteroaryl-, -CO-(C₄-C₂₀)-Aryl-, -(C₃-C₁₂)-Cycloalkyl-, -(C₃-C₁₂)-Heterocycloalkyl-, -(C₄-C₂₀)-Aryl-CO-(C₄-C₂₀)-Aryl-, -(C₁-C₁₄)-Alkyl-O-(C₁-C₁₄)-Alkyl-;
wobei die genannten Alkyl-, Heteroalkyl-, Cycloalkyl-, Heterocycloalkyl-, Aryl- und Heteroarylgruppen optional ein oder mehrfach substituiert sind;
umfassend die Verfahrensschritte:
a) Kontaktieren des Organotetraphosphits mit einer Lösung, die zumindest ein Lösungsmittel und zumindest eine Base umfasst, wobei das zumindest eine Lösungsmittel ausgewählt ist aus Aromaten, Alkoholen, Aceton, Ethylacetat, Acetonitril und Ether, und wobei die zumindest eine Base ausgewählt ist aus Aminbasen, Alkoholaten, Pyridin, Pyridinderivaten, *N*-Methyl-2-pyrrolidon Triethylamin und Triethanolamin,
b) Einstellen der Temperatur auf einen Wert im Bereich von - 20 °C bis + 15 °C,
c) Abtrennen des aufgereinigten Organotetraphosphits.

2. Verfahren nach Anspruch 1,
wobei das zumindest eine Lösungsmittel ausgewählt ist aus Acetonitril, Ethylacetat, Ethanol, Propanol, Toluol.

3. Verfahren nach einem der Ansprüche 1 oder 2,
wobei die Lösung, mit der das Organotetraphosphit in Schritt a) kontaktiert wird, neben dem zumindest einen Lösungsmittel und der zumindest einen Base auch max. 5 % Wasser bezogen auf den Gehalt an Lösungsmittel enthält.

4. Verfahren nach einem der Ansprüche 1 bis 3,
wobei die zumindest eine Base ausgewählt ist aus Triethylamin und Dimethylaminobutan.

5. Verfahren nach einem der Ansprüche 1 bis 4,
wobei X und Y für O stehen.

6. Verfahren nach einem der Ansprüche 1 bis 4,
wobei X und Y für N stehen.

7. Verfahren nach einem der Ansprüche 1 bis 6,
wobei V und W jeweils unabhängig voneinander ausgewählt sind aus:
-H, -(C₁-C₁₂)-Alkyl, -O-(C₁-C₁₂)-Alkyl, -(C₄-C₂₀)-Aryl, -(C₄-C₂₀)-Aryl-(C₁-C₁₂)-Alkyl, -(C₄-C₂₀)-Aryl-O-(C₁-C₁₂)-Alkyl, -(C₁-C₁₂)-Alkyl-(C₄-C₂₀)-Aryl, -(C₄-C₂₀)-Aryl-COO-(C₁-C₁₂)-Alkyl.

8. Verfahren nach einem der Ansprüche 1 bis 7,
wobei V und W oder nur einer der Substituenten V und W für 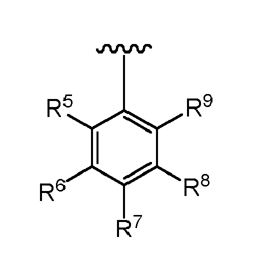 steht,
wobei R⁵, R⁶, R⁷, R⁸, R⁹ unabhängig voneinander ausgewählt sind aus -H, -(C₁-C₁₂)-Alkyl, -O-(C₁-C₁₂)-Alkyl, -Phenyl, -COO-(C₁-C₁₂)-Alkyl.

9. Verfahren nach einem der Ansprüche 1 bis 7,
wobei Z ausgewählt ist aus 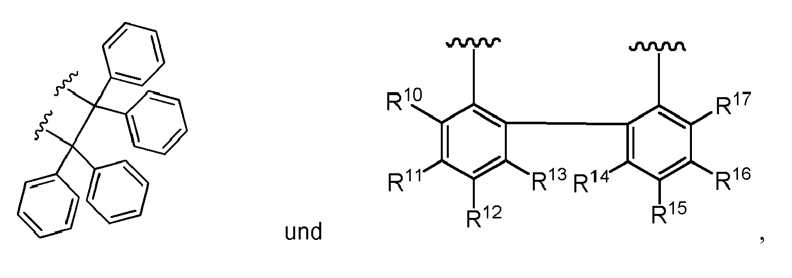 wobei R¹⁰, R¹¹, R¹², R¹³, R¹⁴, R¹⁵, R¹⁶, R¹⁷ jeweils unabhängig voneinander ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl, -Halogen (wie Cl, F, Br, I), -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H, -SO₃Na, -NO₂, -CN, -NH₂, -N[(C₁-C₁₂)-Alkyl]₂.

10. Verfahren nach einem der Ansprüche 1 bis 9,
wobei das in Verfahrensschritt a) eingesetzte Organotetraphosphit einen Chlorgehalt von 1.500 ppm bis 100.000 ppm aufweist.

11. Verfahren nach einem der Ansprüche 1 bis 10,
wobei das aufgereinigte Organotetraphosphit einen Chlorgehalt von < 1.000 ppm aufweist.

12. Verfahren nach einem der Ansprüche 1 bis 11,
wobei R¹, R³, R⁴ für -H stehen.

13. Verfahren nach einem der Ansprüche 1 bis 12,
wobei R² *tert*-Butyl ist.

14. Verfahren nach einem der Ansprüche 1 bis 13,
wobei das Organotetraphosphiten eine der Strukturformeln **III, IV**, V, **VI, VII, VIII, IX,** X, **XI**, **XII**, **XIII, XIV** und **XV** aufweist:
